# EUROPÄISCHE PATENTSCHRIFT

(11) **EP 2 662 739 B1**
(45) Veröffentlichungstag und Bekanntmachung des Hinweises auf die Patenterteilung: **27.03.2019**
(21) Anmeldenummer: 13166982.2
(22) Anmeldetag: 08.05.2013
(51) Int. Cl.: G05B 19/4065, G05B 19/409, G05B 19/4097

(54) **Verfahren und Vorrichtung zur automatisierten Konfiguration einer Überwachungsfunktion einer Werkzeugmaschine**
Method and device for the automated configuration of a monitoring function of a machine tool
Procédé et dispositif de configuration automatisée d'une fonction de surveillance d'une machine-outil

(30) Priorität: 11.05.2012 DE 102012207916
(43) Veröffentlichungstag der Anmeldung: 13.11.2013
(73) Patentinhaber: MARPOSS Monitoring Solutions GmbH, 21272 Egestorf (DE)
(72) Erfinder: Lange, Dirk, 21335 Lüneburg (DE); Euhus, Dirk, 29643 Neuenkirchen (DE); Bonas, Frank August Joachim, 27389 Fintel (DE)
(74) Vertreter: Wegner, Hans

(56) Entgegenhaltungen:
- EP-A1- 2 189 861
- EP-B1- 2 837 981
- DE-A1- 10 222 521

## Beschreibung

### 1. Technisches Gebiet

Die vorliegende Erfindung betrifft ein Verfahren und eine Vorrichtung zur automatisierten Konfiguration einer Überwachungsfunktion für eine Werkzeugmaschine.

### 2. Stand der Technik

Heutzutage werden hohe Anforderungen an die Wirtschaftlichkeit und Produktivität von Fertigungsanlagen gestellt. Auf der anderen Seite bestehen aber gleichzeitig auch hohe Ansprüche an die Qualität der gefertigten Produkte oder Werkstücke. Diese gegenläufigen Zielsetzungen lassen sich zumeist nur durch einen weitgehenden Automatisierungsgrad erreichen. Eine automatisierte Fertigung kann jedoch beim Auftreten eines Fehlers in kurzer Zeit zu einer großen Ausschussmenge führen, wenn der Fehler nicht oder nicht rechtzeitig erkannt wird.

Werkzeugmaschinen bilden Schlüsselelemente in vielen Produktionsanlagen. Es ist deshalb notwendig, einen automatisierten Betrieb einer Werkzeugmaschine durch Sensorsysteme in Echtzeit zu überwachen, um beim Auftreten eines Fehlers schnell und situationsangemessen reagieren zu können.

Der Zustand des Werkzeugs, das zur Bearbeitung eines Werkstücks eingesetzt wird, hat einen wesentlichen Einfluss auf die Qualität des zu fertigenden Werkstücks. Darüber hinaus steigt für ein stark abgenutztes Werkzeug die Wahrscheinlichkeit für dessen Bruch stark an. Wird in automatisierten Fertigungseinrichtungen ein fehlendes oder gebrochenes Werkzeug nicht oder nicht rechtzeitig erkannt, kann dies zu hohen Ausschussraten führen. Im schlimmsten Fall werden fehlerbehaftete Werkstücke oder Bauteile in ein Endprodukt eingebaut, was hohe Schäden auf der Kundenseite zur Folge haben kann.

Die angesprochene Problematik gilt in gleichem Maße, wenn nicht korrekte Werkstücke nicht oder nicht rechtzeitig erkannt werden und somit durch die Fertigungslinie bearbeitet werden. Diese müssen am Ende der Bearbeitung verworfen werden oder werden fälschlicherweise in einem Endprodukt verbaut. Es ist daher sehr wichtig, solche Fehlerquellen rechtzeitig zu erkennen und zu beseitigen.

Derzeit gibt es bereits eine Anzahl von Systemen und Vorrichtungen zur Werkzeugüberwachung. Diese Systeme basieren auf der direkten oder indirekten Messung der bei der Zerspanung umgesetzten Leistung. Zur indirekten Messung des Drehmoments zur Werkzeugüberwachung können beispielsweise Sensoren auf der Basis von Piezoquarzen auf dem Werkzeug angebracht werden, wie dies zum Beispiel in der Offenlegungsschrift DE 29 06 892 ausgeführt ist. Die Patentschrift DE 10 2006 834 und die Offenlegungsschrift DE 10 2004 051 145 A1 der Anmelderin beschreiben wie Signale, die von verschiedenen auf der Spindel der Werkzeugmaschine angeordneten Sensoren aufgenommen werden, drahtlos an eine ortsfeste Empfangseinheit übertragen werden können.

Die Offenlegungschrift DE 102 22 521 A1 offenbart ein Verfahren zur Verhinderung von Beschädigungen von Werkzeugen und/oder Werkstücken durch Bearbeitungsvorgänge auf numerisch gesteuerten Werkzeugmaschinen durch Vermeiden von Fehlern bei der Werkzeugauswahl. Die Aufgabe wird gelöst, indem vor Beginn wenigstens eines Bearbeitungsschrittes einer Bearbeitungsfolge ein Vergleich von wenigstens einem Parameter eines zur Durchführung des Bearbeitungsschrittes ausgewählten Werkzeugs mit wenigstens einem aus der Werkstückgeometrie abgeleiteten Grenzwert für diesen Parameter durchgeführt wird und, wenn wenigstens ein Grenzwert über- bzw. unterschritten wird, der Ablauf unterbrochen und gegebenenfalls eine Information ausgegeben wird.

Die europäische Patentanmeldung DP 2 189 861 A1 offenbart ein Verfahren zur Erstellung eines Teileprogramms, das Steuerbefehle aufweist anhand derer die Bewegungen eines Werkzeugs steuerbar sind, wobei Bewegungsinformationen, die Informationen über durchzuführende Bewegungen des Werkzeugs und durchzuführende Bearbeitungsvorgänge beinhalten, eingelesen werden. Verfügbarkeitsinformationen werden eingelesen, die die an einer Steuerungseinrichtung der Werkzeugmaschine für bestimmte durchzuführende Bearbeitungsvorgänge zur Verfügung stehende Steuerungsunterprogramme angeben, wobei zur Erstellung des Teileprogramms die Steuerbefehle derart anhand der verfügbaren Steuerungsunterprogramme und der Bewegungsinformationen erzeugt werden, dass, falls für einen durchzuführenden Bearbeitungsvorgang ein für den Bearbeitungsvorgang zugehöriges Steuerungsprogramm in der Steuerungseinrichtung zur Verfügung steht, ein Steuerungsunterprogrammaufruf zum Aufruf des für den Bearbeitungsvorgang zugehörigen Steuerungsunterprogramms als Steuerbefehl erzeugt wird.

Moderne Systeme, die zum Überwachen von Werkzeugen und/oder Prozessen eingesetzt werden, verfügen über leistungsfähige Schnittstellen, um Befehle und Daten von dem Überwachungssystem auf eine Werkzeugmaschine zu übertragen.

Moderne CNC (Computerized Numerical Control) Werkzeugmaschinen weisen eine Speicher-programmierbare Steuerung (SPS) (englisch: PLC für Programmable Logic Controller) oder eine Anpassungssteuerung auf. Ein Überwachungssystem kommuniziert über die SPS mit der Werkzeugmaschine und überträgt über diese Schnittstelle einen Teil seines Steuerbefehlssatzes an die SPS der Werkzeugmaschine.

Ein zweiter Teil der Steuerbefehle des Überwachungssystems ist der SPS der Werkzeugmaschine allerdings nicht bekannt. Schließlich ist ein dritter Teil der Steuerbefehle von dem durch die Werkzeugmaschine durchzuführenden Prozess oder dem zu bearbeitenden Werkstück abhängig.

Deshalb muss das für die Werkzeugmaschine zuständige Bedienpersonal (d.h. der Maschinenführer oder der Arbeitsvorbereiter) zusätzliche Steuerbefehle oder Überwachungsanweisungen in das Steuerprogramm der Werkzeugmaschine eintragen, um das Überwachungssystem an den jeweiligen Bearbeitungsvorgang anzupassen. Dies bedeutet einen erheblichen Anpassungsaufwand für das jeweilige Steuerprogramm und ist insbesondere bei langen Steuerprogrammen sehr aufwändig oder sogar unmöglich. Im Ergebnis führt dies häufig dazu, dass das Bedienpersonal das Überwachungssystem gar nicht oder nur unzureichend an den durchzuführenden Bearbeitungsprozess anpasst. Dadurch wird das Überwachungssystem häufig in einem Modus falscher und/oder reduzierter Funktion betrieben. Der zunehmende Trend zu höherer Teilevielfalt und zu längeren Steuerungsprogrammen verstärkt die diskutierte Problematik zusätzlich.

Der vorliegenden Erfindung liegt daher das Problem zugrunde, ein Verfahren und eine Vorrichtung bereitzustellen, mit deren Hilfe eine Überwachungsfunktion möglichst gut auf einen Bearbeitungsprozess abgestimmt werden kann, der auf einer Werkzeugmaschine ablaufen soll.

### 3. Zusammenfassung der Erfindung

Dieses Problem wird gemäß einem ersten Aspekt der Erfindung durch ein Verfahren nach Anspruch 1 gelöst. In einer Ausführungsform weist ein Verfahren zum automatisierten Bereitstellen einer Überwachungsfunktion für einen Bearbeitungsprozess, der von einer Werkzeugmaschine durchführt werden soll, folgende Schritte auf: (a) Analysieren eines Computer-Aided Manufacturing (CAM)-Programms des Bearbeitungsprozesses mit Hilfe eines Postprozessors auf Bearbeitungsschritte, die überwacht werden sollen; und (b) Einfügen zumindest einer Überwachungsanweisung in ein Steuerprogramm der Werkzeugmaschine durch den Postprozessor, die beim Durchführen des Bearbeitungsprozesses ausgeführt wird.

Anders als im Stand der Technik findet das Einstellen einer Überwachungsfunktion oder eines Überwachungssystems einer Werkzeugmaschine für einen speziellen Bearbeitungsprozess nicht in der Produktionsumgebung statt, sondern dort wo das CAM-Systems läuft. Ein CAM-System erstellt aus einem dreidimensionalen Modell des Werkstücks ein CAM-Programm, das alle zur Herstellung des Werkstücks aus einem Rohling notwendigen Bearbeitungsschritte beschreibt. In der CAM-Umgebung wird der Bearbeitungsprozess des Werkstücks einmal vollständig durchdacht. Die Erfindung ermöglicht parallel zur Analyse der Bahnen und Geschwindigkeiten der einzelnen Werkzeuge in der CAM-Umgebung die einzelnen Schritte der Überwachung des Bearbeitungsprozesses zu analysieren. Als Folge der identifizierten kritischen Bearbeitungsschritte des Bearbeitungsprozesses kann das Überwachungssystem der Werkzeugmaschine sorgfältig auf die kritischen Schritte des Bearbeitungsprozesses eingestellt werden.

Darüber hinaus definiert das erfindungsgemäße Verfahren einen weitgehend automatisierten Einstellprozess für eine Überwachungsfunktion eines Bearbeitungsprozesses, der auf einer Werkzeugmaschine durchgeführt wird. Damit wird sichergestellt, dass menschliches Fehlverhalten den Einstellprozess der Überwachungsfunkton oder eines Überwachungssystems möglichst wenig beeinflussen kann.

Die Erfindung schließt jedoch ein zusätzliches manuelles Eingeben, Ändern oder Löschen von einer oder mehrerer Überwachungsanweisungen in das Steuerprogramm der Werkzeugmaschine an der Werkzeugmaschine selber nicht aus.

Ein weiterer Aspekt weist das Anordnen des Postprozessors in dem CAM-System auf.

Wie bereits oben ausgeführt, ist ein CAM-System die bevorzugte Umgebung, um die Einstellungen des Überwachungssystems für den späteren Fertigungsprozess vorzunehmen. Wenn bereits ein Steuerprogramm für die Werkzeugmaschine vorliegt, ist es jedoch auch möglich in der Werkzeugmaschine oder in einem anderen entsprechend vorbereiteten Computersystem in einem weitgehend automatisierten Prozess, die Überwachungsanweisung(en) nachträglich in das vorhandene Steuerprogramm einzufügen.

Gemäß einem weiteren Aspekt umfasst das Steuerprogramm ein Numerical Control (NC)-Programm, das von dem Postprozessor in dem CAM-System erzeugt wird.

Derzeit wird auf vielen Werkzeugmaschinen ein Steuerprogramm in Form eines Computerized Numerical Control (CNC)-Programms oder kurz ein NC-Programm eingesetzt. Das oben beschriebene Verfahren ist jedoch nicht auf eine spezifische Programmiersprache beschränkt, weder für das CAM-Programm noch für das Steuerprogramm.

In einem anderen Aspekt umfasst das Analysieren des Steuerprogramms das Ausführen zumindest eines Analyse-Skripts durch den Postprozessor.

Skripte sind geeignete Werkzeuge um ein CAM-Programm in automatisierter Form nach vorgegebenen Kriterien oder Bedingungen zu untersuchen.

Gemäß einem weiteren Aspekt wertet der Postprozessor beim Analysieren eines CAM-Programms Extensions von Werkzeugpfaden des CAM-Programms und/oder in den Werkzeugpfaden des CAM-Programms vorhandene Nutzer-definierte Eigenschaften aus.

Die Anweisungen zum automatisierten Bereitstellen einer Überwachungsfunktion können in verschiedener Weise in einem CAM-Programm vorhanden sein. Zum Beispiel können diese Anweisungen in Form von Erweiterungen oder Extensions Überschriften von Programmteilen des CAM-Programms hinzugefügt werden, die Werkzeugpfade definieren. In einem anderen Beispiel werden diese Anweisungen in Form eigener Angaben als Nutzer-definierte Eigenschaften oder User Defined Properties den Programmteilen des CAM-Programms hinzugefügt, die Werkzeugpfade beschreiben.

In einem bevorzugten Aspekt betreffen die Extensions der Werkzeugpfade des CAM-Programms und/oder die in Werkzeugpfaden des CAM-Programms vorhandenen Nutzer-definierten Eigenschaften einen Betriebsmodus des Überwachungssystems und/oder eine Qualitätseinstellung des Überwachungssystems und/oder ein Erzeugen eines Alarmereignisses.

Nach einem weiteren Aspekt aktiviert oder deaktiviert der Betriebsmodus das Überwachungssystem. Gemäß einem anderen Aspekt aktiviert oder deaktiviert der Betriebsmodus einen passiven Überwachungsmodus oder aktiven adaptiven Überwachungsmodus.

In einem aktiven adaptiven Überwachungsmodus ist neben dem Überwachen eines Bearbeitungsschritts die primäre Zielsetzung des Überwachungssystems die Optimierung der Zykluszeit des Bearbeitungsprozesses. In einem passiven Überwachungsmodus optimiert das Überwachungssystem in erster Linie oder ausschließlich die Qualitätskontrolle des Bearbeitungsprozesses.

Nach noch einem anderen Aspekt umfasst die Qualitätseinstellung mehrere Qualitätslevel, insbesondere einen niedrigen, einen mittleren und einen hohen Qualitätslevel. Gemäß einem weiteren Aspekt umfasst das Alarmereignis einen unmittelbaren Stopp der Werkzeugmaschine, einen verzögerten Stopp der Werkzeugmaschine und/oder keinen Stopp der Werkzeugmaschine. In einem anderen Aspekt umfasst das Erzeugen des Alarmereignisses ein Weitergeben des Alarmereignisses von dem Überwachungssystem an die Werkzeugmaschine.

In einem Ausführungsbeispiel umfassen die Extensions der Werkzeugpfade des CAM-Programms und/oder die in Werkzeugpfaden des CAM-Programms vorhandenen Nutzer-definierten Eigenschaften Fertigungsvorgaben und/oder Parameterwerte zum Bestimmen von zumindest einer Einstellung des Überwachungssystems.

In den bisher ausgeführten Aspekten bekommt ein Überwachungssystem seine Einstellungen durch die Überwachungsanweisung(en) in dem Steuerprogramm der Werkzeugmaschine mitgeteilt und führt diese Anweisungen einfach aus. In dem im vorhergehenden Absatz beschriebenen Aspekt wird das Überwachungssystem hingegen angewiesen, seine Einstellungen aus bereitgestellten Parameterwerten und/oder von Fertigungsvorgaben selbst zu bestimmen.

Ferner können die Extensions den Werkzeugpfaden oder Programmzeilen des CAM-Programms beim Erzeugen des CAM-Programms aus CAD Daten hinzugefügt werden. Nach einem weiteren Aspekt werden die Steuerbefehle oder Anweisungen für das Überwachungssystem dem CAM-Programm als in Werkzeugpfaden des CAM-Programms vorhandene Nutzer-definierten Eigenschaften bei dessen Erzeugen hinzugefügt.

Wie bereits oben ausgeführt, werden beim Erzeugen des CAM-Programms alle an einem Werkstück durchzuführenden Bearbeitungsschritte analysiert. Es ist deshalb günstig gleichzeitig mit der Analyse der Bearbeitungsschritte des Herstellungsprozesses eines Werkstücks die Funktion des Überwachungssystems für den jeweiligen Bearbeitungsschritt festzulegen. Dadurch kann eine optimale Synchronisierung von Bearbeitungsprozess und Überwachungsfunktion sichergestellt werden.

Gemäß einem anderen Aspekt werden die Extensions der Werkzeugpfade und/oder die in Werkzeugpfaden des CAM-Programms vorhandenen Nutzer-definierten Eigenschaften aus einer ersten Bibliothek ausgewählt.

Es gibt mehrere Möglichkeiten die Anweisungen zum Einstellen des Überwachungssystems in ein CAM-Programm einzubringen. So ist es möglich, die zu den verschiedenen Extensions gehörenden Einstellungen des Überwachungssystems in einer Bibliothek zu speichern. Beim Erzeugen des CAM-Programms werden neben den Bahnbewegungen der Werkzeuge auch die Vorgaben des Fertigungsprozesses analysiert. Aus der ersten Bibliothek wird die dazu passende Extension und/oder Nutzer-definierte Eigenschaft ausgewählt und als Erweiterung des Programmteils, der den entsprechenden Werkzeugpfad beschreibt, hinzugefügt bzw. als eigene Programmzeile(n) in den entsprechenden Werkzeugpfad des CAM-Programms eingefügt.

In einem weiteren bevorzugten Aspekt schränkt der Anwendungsbereich eines gefertigten Werkstücks das Auswählen der Extensions und/oder der Nutzer-definierten Eigenschaften aus der ersten Bibliothek ein.

Je nach Einsatzgebiet oder Anwendungsbereich (z.B. medizinischer Bereich, Automobilbereich oder Luft- und Raumfahrttechnik) des Werkstücks gibt es unterschiedliche Fertigungsvorgaben für dessen Herstellungsprozess. Diese Vorgaben können in der ersten Bibliothek hinterlegt werden und führen über eine entsprechende Auswahl der Extensions bzw. der Nutzer-definierten Eigenschaften zu einer Berücksichtigung der jeweiligen Fertigungsvorgaben durch die Werkzeugmaschine und das zugehörige Überwachungssystem.

In noch einem anderen bevorzugten Aspekt schränkt eine Bearbeitungsart und/oder ein Werkzeug das Auswählen der Extensions und/oder der Nutzer-definierten Eigenschaften aus der ersten Bibliothek ein.

Unterschiedliche Bearbeitungsarten wie etwa Bohren, Fräsen oder Gewindeschneiden weisen verschiedene Anforderungen an die Funktionsweise des Überwachungssystems auf. Diese Anforderungen können ebenfalls in der ersten Bibliothek hinterlegt werden und durch Auswählen einer entsprechenden Extension für einen Werkzeugpfad des CAM-Programms und/oder durch in einem Werkzeugpfad des CAM-Programms vorhandene Nutzer definierte Eigenschaften dem Überwachungssystem der Werkzeugmaschine mitgeteilt werden.

Gemäß einem weiteren Aspekt schränkt ein Prozessfortschritt innerhalb eines Bearbeitungsschritts das Auswählen der Extensions und/oder das Auswählen der Nutzer-definierten Eigenschaften aus der ersten Bibliothek ein.

Ein Bearbeitungsschritt eines Bearbeitungsprozesses wird häufig in mehreren aufeinanderfolgenden Teilschritten durchgeführt wie beispielsweise einer Grobbearbeitung und einer anschließenden Feinbearbeitung. Die Anforderungen an eine Überwachungsfunktion sind für die beiden Teilschritte unterschiedlich. Die verschiedenen Anforderungen werden ebenfalls, wie oben beschrieben, in einer Bibliothek abgelegt.

Nach noch einem anderen Aspekt werden die Extensions und/oder die Nutzer-definierten Eigenschaften des CAM-Programms automatisch erzeugt oder manuell hinzugefügt.

Wie bereits oben erläutert, kann eine Extension und/oder eine Nutzer-definierte Eigenschaft aus einer ersten Bibliothek ausgewählt werden und automatisch als Erweiterung oder Extension an einen entsprechenden Werkzeugpfad eines CAM-Programms angefügt werden oder die Nutzer-definierte Eigenschaft kann als eigene Programmzeile in das CAM-Programm eingefügt werden.

Alternativ kann die Person, die die Erzeugung des CAM-Programms überwacht oder selbst durchführt, die Extensions und/oder die Nutzer-definierten Eigenschaften zum Einstellen des Überwachungssystems manuell in die erzeugten Werkzeugpfade des CAM-Programms eintragen. Dabei kann sie auf die oben beschriebene Bibliothek und/oder ihr Expertenwissen zurückgreifen. Darüber hinaus ist es ferner möglich, dass ein Teil der Erweiterungen und/oder der Nutzer-definierten Eigenschaften automatisch in das CAM-Programm bei dessen Generierung eingefügt wird und ein anderer Teil manuell nachträglich hinzugefügt wird.

In noch einem weiteren Aspekt umfasst das Einfügen zumindest einer Überwachungsanweisung in ein Steuerprogramm der Werkzeugmaschine das Ausführen zumindest eines Einfüge-Skripts durch den Postprozessor.

Gemäß einem anderen Aspekt umfasst das Einfügen der zumindest einen Überwachungsanweisung in das Steuerprogramm das Einfügen zumindest einer H-Funktion und/oder zumindest einer M-Funktion in das Steuerprogramm.

In dem oben genannten Aspekt umfasst das Steuerprogramm ein NC-Programm in Form von G-Code. Die G-Funktion des G-Codes beschreibt inkrementelle Bewegungen der Koordinatenachsen, d.h. einer oder mehrerer x-/y- und/oder z- Achsen. Die M-Funktion oder H-Funktion beschreibt Aktions-Codes. Diese Funktionen können zum Einstellen oder Synchronisieren eines Überwachungssystems mit einem auf einer Werkzeugmaschine ablaufenden Bearbeitungsprozess verwendet werden.

Gemäß einem weiteren Aspekt umfasst das Einfügen der zumindest einen Anweisung das Einfügen zumindest einer H-Funktion und/oder zumindest einer M-Funktion am Beginn eines Bearbeitungsprozessschrittes und das Aufheben der zumindest einen H-Funktion und/oder der zumindest einen M-Funktion am Ende des Bearbeitungsprozessschrittes.

Nach einem anderen Aspekt ist einer Extension und einer Nutzer-definierten Eigenschaft des CAM-Programms eindeutig zumindest eine Überwachungsanweisung zum Einfügen in das Steuerprogramm der Werkzeugmaschine zugeordnet.

Durch die eindeutige Zuordnung können die Einstellungen eines Überwachungssystems einer Werkzeugmaschine bereits vollständig in dem CAM-Programm festgelegt werden. Eine Anpassung des Steuerprogramms an der Werkzeugmaschine selber ist nicht mehr erforderlich.

In nochmals einem anderen Aspekt erfolgt das Auswählen der zumindest einen Überwachungsanweisung aus einer zweiten Bibliothek, die einer Extension und/oder einer Nutzer-definierten Eigenschaft des CAM-Programms eindeutig zumindest eine Überwachungsanweisung zum Einfügen in das Steuerprogramm der Werkzeugmaschine zuordnet.

Eine Möglichkeit die Extensions und die Nutzer-definierten Eigenschaften von CAM-Programmen, die Konfigurationsdaten einer Überwachungsfunktion oder eines Überwachungssystems eines Werkzeugsystems beschreiben, in Überwachungsanweisungen von Steuerprogrammen für Werkzeugmaschinen abzubilden, ist deren Ablage in einer zweiten Bibliothek. In einem Ausführungsbeispiel identifiziert ein Analyse-Skript eine Extension in einem entsprechenden Werkzeugpfad eines CAM-Programms und gibt die Identifikation der Extension an ein Einfüge-Skript weiter. Letztes wählt aus der zweiten Bibliothek die zumindest eine Überwachungsanweisung aus und fügt diese in das Steuerprogramm ein. Zusätzlich oder alternativ erkennt das Analyse-Skript eine in einem Werkzeugpfad des CAM-Programms vorhandene Nutzer-definierte Eigenschaft und das Einfüge-Skript wählt aus der zweiten Bibliothek die zugehörige(n) Überwachungsanweisung(en) aus und fügt diese in das Steuerprogramm für die Werkzeugmaschine ein.

Nach einem alternativen Aspekt erfolgt das Bestimmen der zumindest einen Überwachungsanweisung durch ein externes Applikationsprogramm.

Ein externes Applikationsprogramm wie beispielsweise eine Direct Link Library (DLL) berechnet die zu einer Extension gehörende(n) Überwachungsanweisung(en) und liefert diese an den Postprozessor des CAM-Systems. Das Applikationsprogramm kann von einem Prozessor des CAM-Systems ausgeführt werden oder in einem Prozessor eines anderen Computersystems ablaufen.

Gemäß einem anderen Aspekt weist die zumindest eine Überwachungsanweisung das Überwachungssystem an, Einstellungen des Überwachungssystems aus Anweisungen des Steuerprogramms und/oder aus Parameterwerten, die mit der zumindest einen Überwachungsanweisung übertragen werden, zu bestimmen.

In den bisher angegeben Aspekten erhält das Überwachungssystem seine Einstellungen oder Konfigurationsdaten über die in das Steuerprogram der Werkzeugmaschine eingefügten Überwachungsanweisung(en). Damit agiert das Überwachungssystem als Slave des Steuerprogramms der Werkzeugmaschine. In dem im vorhergehenden Absatz beschriebenen alternativen Ausführungsbeispiel erhält das Überwachungssystem mittels der Überwachungsanweisung hingegen die Aufforderung seine Einstellungen zum Überwachen des Bearbeitungsprozesses aus den an die Werkzeugmaschine gerichteten Anweisungen des Steuerprogramms und/oder von bereitgestellten Parameterwerten selbst zu bestimmen. Zu diesem Zweck weist das Überwachungssystem einen Prozessor auf, der die Anweisungen des Steuerprogramms lesen und interpretieren kann. Zudem enthält das Überwachungssystem einen nichtflüchtigen Speicher, um aus darin gespeicherten Anweisungen oder Algorithmen die Einstellungen des Überwachungssystems zu bestimmen.

Nach noch einem weiteren Aspekt übergibt die zumindest eine Überwachungsanweisung Grenzwerte für einen Variationsbereich für zumindest eine von dem Überwachungssystem zur Überwachung verwendeten Größe. Gemäß einem anderen Aspekt umfassen die Grenzwerte einen festen unteren und/oder einen festen oberen Grenzwert oder eine untere und/oder eine obere Hüllkurve.

Ein nützlicher Aspekt betrifft ferner das Einstellen von Regeleigenschaften des Überwachungssystems nach Vorgaben, die von der zumindest einen Überwachungsanweisung an das Überwachungssystem übergeben werden.

Anhand der erhaltenden Vorgaben kann sich das Überwachungssystem für den auf der Werkzeugmaschine ablaufenden Bearbeitungsprozess bestmöglich selbst konfigurieren.

Ein günstiger Aspekt weist ferner den Schritt des Aktivierens Werkzeug-bezogener Einstellungen auf der Grundlage von Werkzeugnummern auf, die durch die zumindest eine Überwachungsanweisung an das Überwachungssystem übertragen werden.

Dies ermöglicht das Realisieren einer Werkzeug-spezifischen Einstellung des Überwachungssystems. Damit kann verhindert werden, dass das Überwachungssystem ungünstige Messgrößen oder abgeleitete Größen zum Überwachen des Bearbeitungsprozesses verwendet.

Ein vorteilhafter Aspekt weist ferner den Schritt des Aktivierens bearbeitungsspezifischer Einstellungen auf der Grundlage der Bearbeitungsart auf, die durch die zumindest eine Überwachungsanweisung an das Überwachungssystem übertragen wird.

Damit kann die am besten geeignete Größe (Messgröße oder abgeleitete Größe) zur Überwachung eines spezifischen Bearbeitungsprozesses beispielsweise eines Fräsprozesses zum Einsatz gebracht werden.

In einem weiteren günstigen Aspekt weist eine Vorrichtung zum automatisierten Bereitstellen einer Überwachungsfunktion für einen Bearbeitungsprozess, der von einer Werkzeugmaschine durchführt werden soll, auf: (a) Mittel zum Analysieren eines Computer-Aided Manufacturing (CAM)-Programms des Bearbeitungsprozesses mit Hilfe eines Postprozessors auf Bearbeitungsschritte, die überwacht werden sollen, und (b) Mittel zum Einfügen zumindest einer Überwachungsanweisung in ein Steuerprogramm der Werkzeugmaschine durch den Postprozessor, die beim Durchführen des Bearbeitungsprozesses ausgeführt wird.

Nach einem anderen Aspekt umfassen die Mittel zum Analysieren des CAM-Programms und die Mittel zum Einfügen der zumindest einen Überwachungsanweisung einen Prozessor. Gemäß einem weiteren Aspekt ist der Prozessor in einem CAM-System angeordnet. In noch einem anderen Aspekt erzeugt der Prozessor durch Ausführen des Postprozessors aus dem CAM-Programm das Steuerprogramm für die Werkzeugmaschine.

In einem vorteilhaften Aspekt ist die oben angegebene Vorrichtung ausgebildet, um ein Verfahren nach einem der oben aufgeführten Aspekte auszuführen.

Schließlich umfasst in einem besonders bevorzugten Aspekt ein Computerprogramm Anweisungen zum Durchführen aller Schritte des Verfahrens zum automatisierten Bereitstellen einer Überwachungsfunktion für einen Bearbeitungsprozess nach einem der oben angegeben Aspekte.

### 4. Kurze Beschreibung der Zeichnungen

In der nachfolgenden detaillierten Beschreibung werden derzeit bevorzugte Ausführungsbeispiele der vorliegenden Erfindung unter Bezugnahme auf die begleitenden Figuren erläutert, wobei
- Fig. 1: eine schematische Darstellung einiger wichtiger Komponenten einer Werkzeugmaschine, eines Werkstücks und ein Überwachungssystem nach dem Stand der Technik zeigt;
- Fig. 2: schematisch den Generierungsprozess eines Steuerprogramms für eine Werkzeugmaschine mit angeschlossenem Überwachungssystem nach dem Stand der Technik veranschaulicht;
- Fig. 3: schematisch den Herstellungsprozess eines Steuerprogramms für die in Fig. 2 darstellte Werkzeugmaschine gemäß einem Ausführungsbeispiel eines in der vorliegenden Anmeldung beschriebenen Verfahrens repräsentiert;
- Fig. 4: einen Ausschnitt aus einem CAM-Programm wiedergibt, bei beim zwei Programmzeilen verschiedene Extensions aufweisen;
- Fig. 4a: ein Beispiel für ein Makro angibt, das für den Werkzeugpfad '1' die Nutzer-definierte Eigenschaft PM_Adaptive_Control erstellt und durch Zuweisung des Wertes 'On' aktiviert;
- Fig. 4b: eine Dialog-Oberfläche eines CAM-Programms veranschaulicht, in der Nutzer-definierte Eigenschaften aufgeführt sind;
- Fig. 5: eine Tabelle darstellt, die Extensions für die drei Merkmale aktive Kontrolle, Qualitätslevel und Alarmverhalten auflistet;
- Fig. 6: ein Beispiel eines Bearbeitungsschrittes eines Bearbeitungsprozesses wiedergibt, bei dem der Qualitätslevel des Überwachungssystems niedrig eingestellt ist;
- Fig. 7: den Bearbeitungsprozess der Fig. 6 zeigt, bei dem der Qualitätslevel des Überwachungssystems hoch eingestellt ist;
- Fig. 8: ein Beispiel eines Bearbeitungsschritts eines Bearbeitungsprozesses darstellt, der mit eingeschalteter aktiver Kontrolle durchgeführt wird und an Hand eines konstanten oberen Grenzwertes überwacht wird;
- Fig. 9: den in der Fig. 8 wiedergegebenen Bearbeitungsschritt wiedergibt, wenn die aktive Kontrolle ausgeschaltet ist und der Bearbeitungsschritt mit einer oberen Hüllkurve und hohem Qualitätslevel überwacht wird;
- Fig. 10: den Teil die Tabelle der Fig. 5 repräsentiert, aus dem Extensions zum Überwachen eines vorher zertifizierten Prozesses ausgewählt werden können (weißer Grund, schwarze Schrift);
- Fig. 11: den Teil die Tabelle der Fig. 5 zeigt, aus dem Extensions zum Einstellen eines Überwachungssystems ausgewählt werden können, wenn die primäre Zielsetzung der Überwachung des Bearbeitungsschritts die Minimierung seiner Zykluszeit ist (weißer Grund, schwarze Schrift);
- Fig. 12: den Teil die Tabelle der Fig. 5 darstellt, aus dem Extensions zum Überwachen eines Gewindeschneideprozesses ausgewählt werden können (weißer Grund, schwarze Schrift); und
- Fig. 13: einen Ausschnitt aus einem Steuerprogramm einer Werkzeugmaschine zeigt, bei dem auf Grund einer Extension mit der Kennung 02 in der Tabelle der Fig. 5 vier Programmzeilen mit Überwachungsanweisungen in das Steuerprogramm eingefügt sind.

### 5. Detaillierte Beschreibung bevorzugter Ausführungsbeispiele

Im Folgenden werden gegenwärtig bevorzugte Ausführungsbeispiele des erfindungsgemäßen Verfahrens und der erfindungsgemäßen Vorrichtung zum automatisierten Bereitstellen einer Überwachungsfunktion für einen von einer Werkzeugmaschine ausgeführten Bearbeitungsprozess genauer erläutert. Diese beispielhaften Erläuterungen werden im Zusammenhang mit einer Werkzeugmaschine mit einer Spindel und einem Werkzeug beschrieben. Ein hier beschriebenes Verfahren kann jedoch in jedem Werkzeugmaschinentyp eingesetzt werden.

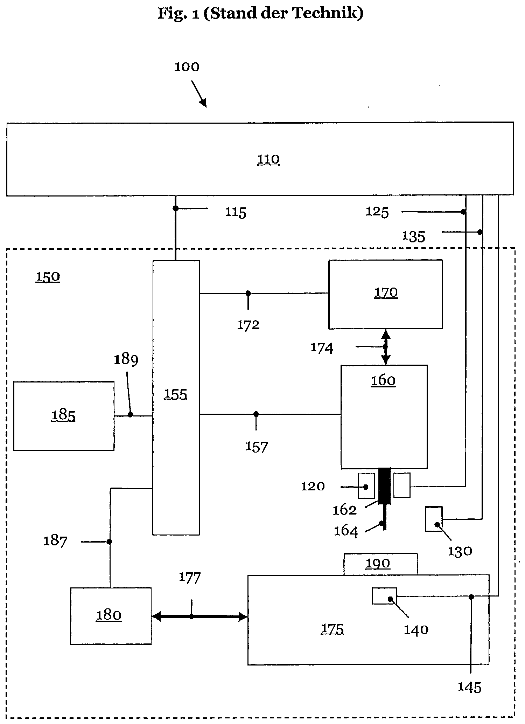

Die Fig. 1 zeigt eine Kombination 100 eines Überwachungssystems 110 und einiger wichtiger Komponenten einer Werkzeugmaschine 150. Diese weist einen Hauptantrieb 160 mit einer Spindel 162 auf. Die Werkzeugaufnahme der Spindel 162 nimmt ein Werkzeug 164 auf. In dem in der Fig. 1 dargestellten Beispiel trägt die Spindel 162 einen Fräser 164. Das Werkzeug 164 der Werkzeugmaschine 150 ist jedoch nicht auf den Einsatz eines Fräsers 164 beschränkt. Vielmehr kann die Werkzeugaufnahme der Spindel 162 alle Arten rotierender Werkzeuge 164 aufnehmen, wie beispielsweise Bohrer, Räumwerkzeuge oder Gewindeschneider (in der Fig. 1 nicht gezeigt).

Der Hauptantrieb 160 wird durch einen ersten Vorschubantrieb 170 in vertikaler Richtung, die im Folgenden auch als z-Achse bezeichnet wird, bewegt. In der Fig. 1 ist dies durch den vertikalen Pfeil 174 angedeutet.

Das Werkzeug 164 ist auf das zu bearbeitende Werkstück 190 gerichtet, das auf einem beweglichen Werktisch 175 oder Schlitten der Werkzeugmaschine 150 angeordnet ist. Zum Fixieren des Werkstücks 190 auf dem Werktisch 175 können alle bekannten Spannvorrichtungen einsetzt werden. Das definierte Verfahren weist keinerlei Einschränkungen hinsichtlich des zu bearbeitenden Werkstücks 190 auf. Vielmehr lässt sich das hier beschriebene Verfahren auf alle Arten von Werkstücken 190 anwenden.

Der Werktisch 175 oder Schlitten wird von einem zweiten Vorschubantrieb 180 in einstellbarer Weise in horizontaler Richtung bewegt. Der Pfeil 177 in Fig. 1 deutet die Bewegungsrichtung des Werktischs 175 an.

Die Werkzeugmaschine 150 wird von einer Speicher-programmierbaren Steuerung (SPS) 155 gesteuert bzw. geregelt. Im englischen Sprachraum wird die SPS Programmable Logic Controller (PLC) genannt. Auf der SPS 155 läuft ein in Folgenden im Detail beschriebenes Steuerprogramm für die Werkzeugmaschine 150.

Die SPS 155 gibt über die Verbindung 157 Signale an den Hauptantrieb 160 zur Steuerung beispielsweise einer vorgegebenen Drehzahl des Werkzeugs 164. Gleichzeitig kann die SPS 155 über die Verbindung 157 Daten von dem Hauptantrieb 160 bezüglich einer tatsächlich vorhandenen, d.h. einer gemessenen Drehzahl des Werkzeugs 164 und beispielsweise des von dem Hauptantrieb 160 gezogenen Stroms erhalten.

Ferner steuert die SPS 155 über die Verbindung 172 den ersten Vorschubantrieb 170. Ebenso wie für den Hauptantrieb 160 kann die SPS 155 über die Verbindung 172 Daten von dem ersten Vorschubantrieb 170 erhalten, die beispielweise die aktuelle Leistungsaufnahme und die Winkellage des Vorschubantriebs 170 kennzeichnen.

In Detail steuert nicht die SPS 155 den Hauptantrieb 160 und den Vorschubantrieb 170, sondern ein in der SPS 155 ablaufendes Steuerprogramm. Dieses Steuerprogramm ist in modernen Werkzeugmaschinen derzeit häufig eine numerische Steuerung oder eine NC (Numeric Control) bzw. eine computergestützte numerische Steuerung oder eine CNC (Computerized Numeric Control). Im Folgenden wird auf diese Unterscheidung verzichtet.

Schließlich arbeitet der zweite Vorschubantrieb 180 für den Werktisch 175, der von der SPS 155 über die Verbindung 187 gesteuert wird, ähnlich wie im vorhergehenden Absatz für den ersten Vorschubantrieb 170 angedeutet.

An dem Bedienfeld oder Bedienterminal 185 kann die SPS 155 über eine Verbindung 189 vorgegebene Einstellungen anzeigen und Daten, die sie von dem Hauptantrieb 160 und den Vorschubantrieben 170, 180 erhalten hat, darstellen. Der Maschinenführer startet und stoppt über eine an dem Bedienfeld 185 angebrachte Tastatur (in der Fig. 1 nicht dargestellt) die Werkzeugmaschine 150. Über die Tastatur des Bedienfeldes 185 kann der Maschinenführer oder ein Arbeitsvorbereiter ferner Änderungen an einem auf der Werkzeugmaschine 150 ablaufenden Steuerprogramm vornehmen und so den Ablauf eines Bearbeitungsprozesses und dessen Überwachung beeinflussen.

In dem veranschaulichenden Beispiel der Fig. 1 weist das Überwachungssystem 110 drei Sensoren auf, die Daten messen mit deren Hilfe ein Bearbeitungsprozess, der auf der Werkzeugmaschine 150 ausgeführt wird, überwacht werden kann.

Der Sensor 120 überwacht das Drehmoment der Spindel 164 und sendet die Messdaten über die Verbindung 125 an das Überwachungssystem 110. Wie im einleitenden Teil angedeutet, kann der Sensor 120 auf der Basis von Piezoquarzen ausgeführt werden, die auf dem Werkzeug 164 angebracht sind.

Der Sensor 130 misst den Vorschub 174 des ersten Vorschubantriebs 170. Ferner detektiert ein in dem Werktisch 175 angeordneter dritter Sensor 140 den Körperschall, der von dem Bearbeitungsprozess (einem Fräsprozess in dem Beispiel der Fig. 1) erzeugt wird.

Die Sensoren 120, 130 und 140 übermitteln ihre Messdaten über die Verbindungen 125, 135 und 145 an das Überwachungssystem 110. Die Verbindung zwischen den Sensoren 120, 130 und 140 und dem Überwachungssystem 110 kann drahtgebunden oder drahtlos ausgeführt werden. Falls möglich ist eine drahtlose Datenübertragung zwischen dem Sensor 120, 130 und 140 und dem Überwachungssystem 110 bevorzugt. Bei dieser Ausführung schränken keine Drähte die Bewegungen der verschiedenen Teile der Werkzeugmaschine 150 ein und zum anderen können Verbindungsdrähte nicht beschädigt oder zerstört werden.

Im einfachsten Fall gibt das Überwachungssystem 110 die Messdaten der Sensoren 120, 130 und 140 über die Verbindung 115 an die SPS 155 der Werkzeugmaschine 150 weiter. Die SPS kann dann veranlassen, dass alle Daten oder ein Teil der Daten dem Maschinenführer der Werkzeugmaschine 150 an dem Bedienfeld 185 angezeigt werden.

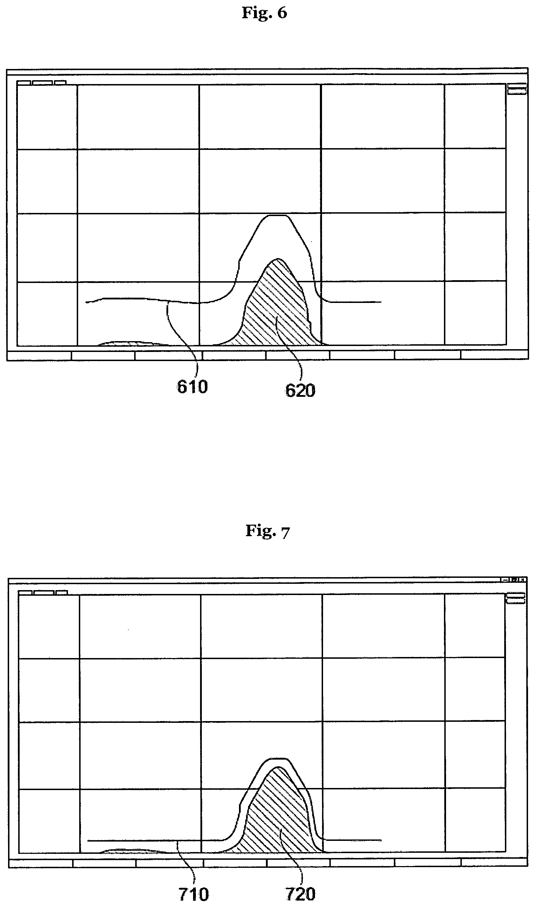

In der Regel bearbeitet das Überwachungssystem 110 jedoch die von den Sensoren 120, 130 und 140 gelieferten Messdaten. Dies kann in einfachen Fällen beispielsweise ein Filtern und/oder ein Verstärken der Messdaten sein. Es ist jedoch andererseits häufig notwendig, aus den Messdaten der Sensoren 120, 130 und 140 andere Größen abzuleiten, die besser für die Überwachung eines spezifischen Bearbeitungsprozesses geeignet sind. Das Überwachungssystem 110 gibt dann die abgeleiteten Größen über die SPS 155 der Werkzeugmaschine 150 an deren Bedienfeld 185 zur Anzeige aus. Häufig werden die den Bearbeitungsprozess charakterisierenden Größen zusammen mit zulässigen Grenzwerten angezeigt (siehe Figuren 6 bis 9).

Überschreitet eine zur Überwachung eines Bearbeitungsprozesses eingesetzte aus den Messdaten der Sensoren 120, 130, 140 abgeleitete Größe einen Grenzwert, löst das Überwachungssystem 110 einen Alarm aus. Ein Alarm kann einen sofortigen Stopp der Werkzeugmaschine 150 bewirken, d.h. der Hauptantrieb 160 und die Vorschubantriebe 170 und 180 werden unmittelbar angehalten oder nur die Vorschubantriebe 170 und 180 werden angehalten. Ferner kann ein Alarm das Anhalten der Werkzeugmaschine 150 am Ende des Bearbeitungsschritts bewirken oder beispielsweise nur das Anzeigen einer Mitteilung für den Maschinenführer der Werkzeugmaschine 150 an deren Bedienfeld 185 bewirken.

Anders als in dem in der Fig. 1 dargestellten Beispiel ist es auch möglich, dass das Überwachungssystem 110 ein eigenes Display oder einen eigenen Monitor aufweist, auf dem die aufbereiteten Daten eines oder mehrerer Sensoren 120, 130, 140 in Kombination mit entsprechenden Grenzwerten dargestellt werden.

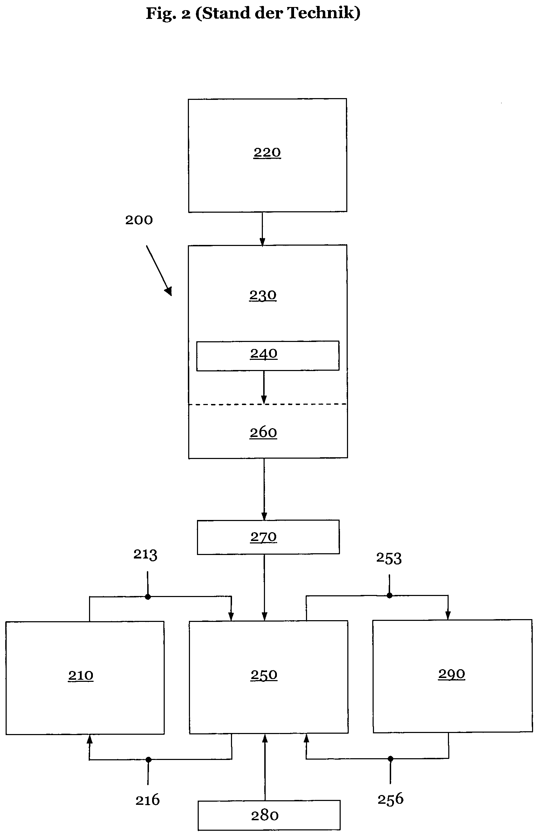

Anhand der schematischen Darstellung der Fig. 2 wird im Folgenden der Herstellungsprozess eines Steuerprogramms für die Kombination einer Werkzeugmaschine 150 und eines Überwachungssystems 110 der Fig. 1 nach dem Stand der Technik erläutert. In der Fig. 2 weist das Überwachungssystem das Bezugszeichen 210 auf und die Werkzeugmaschine bzw. der Bearbeitungsprozess werden durch die Bezugszeichen 250 bzw. 290 gekennzeichnet.

Wie bereits während der Diskussion der Fig. 1 ausgeführt, gibt die Werkzeugmaschine 150, 250 über den Hauptantrieb 160 und die Vorschubantriebe 170, 180 ein Drehmoment und Vorschubkräfte 253 an den Bearbeitungsprozess 290. Der Bearbeitungsprozess 290 wiederum liefert Prozesskräfte, zumindest ein Drehmoment und/oder Schwingungen, symbolisiert durch die Verbindung 256, an die Sensoren 120, 130, 140 sowie an die in dem Hauptantrieb 160 und den Vorschubantrieben 170 und 180 vorhandenen Sensoren (in den Figuren 1 und 2 nicht eingezeichnet). Die Werkzeugmaschine 150, 250 gibt die Signale der Sensoren 120, 130 und 140 in Fig. 2 über die Verbindung 216 an das Überwachungssystem 210. Letzteres teilt über die Verbindung 213 der Werkzeugmaschine 250 Fehlerzustände mit.

Der in der Fig. 2 dargestellte Prozess beginnt mit dem Erzeugen eines dreidimensionalen Modells eines zu fertigenden Werkstücks 190 mit Hilfe eines Computer-Aided Design (CAD)-Systems 220.

Die Daten des dreidimensionalen Modells des zu fertigenden Werkstücks 190 werden dann in einem meist standardisierten Format, wie beispielsweise Step oder IGES in ein Computer-Aided Manufacturing (CAM)-System 230 eingelesen. In dem CAM-System erfolgt dann die Planung des Bearbeitungsprozesses 290, den die Werkzeugmaschine 150, 250 später ausführen soll, durch die Auswahl und die Zuordnung der für den Bearbeitungsprozess 290 benötigten Werkzeuge 164. Als Planungsgrundlage dienen dabei die von dem CAD-System 220 übernommenen CAD-Daten des zu fertigenden Werkstücks 190.

Das CAM-System 230 generiert zu jedem Werkzeug 164 eine entsprechende Bahn von der Werkzeugablage, dem Transport des Werkzeugs 164 zum Einsatzort an dem Werkstück 190, dem eigentlichen Bearbeitungsschritt sowie dem Rücktransports des Werkzeugs 164 zur Werkzeugablage. Neben der Bahn berechnet das CAM-System 230 ferner die Geschwindigkeiten mit denen die verschiedenen Abschnitte der Bahnbewegung durchlaufen werden. Für den eigentlichen Bearbeitungsprozessschritt an dem Werkstück 190 bestimmt das CAM-System 230 zudem die Drehzahl des Werkzeugs 164 sowie die Vorschubraten der Vorschubantriebe 170 und 180. Die Beschreibung der Bahnbewegungen aller Werkzeuge 164 einschließlich der jeweiligen Geschwindigkeiten bildet das CAM-Programm 240 für das zu fertigende Werkstück 190.

Im Anschluss an die Generierung des CAM-Programms 240 wird der Bearbeitungsprozess 290 des zu fertigenden Werkstücks 190 in dem CAM-System 230 simuliert.

Nach erfolgreichem Verlauf der Simulation in dem CAM-System 230 erzeugt ein Postprozessor 260 des CAM-Systems 230 auf dem CAM-Programm 240 automatisch das Steuerprogramm 270 für die SPS 155 der Werkzeugmaschine 150, 250. Da - wie bereits erwähnt - die meisten derzeit eingesetzten Werkzeugmaschinen 150, 250 durch eine Speicher-programmierbare Steuerung (SPS) 155 gesteuert bzw. geregelt werden, umfasst das Steuerprogramm 270 häufig ein Computerized Numerical Control (CNC)-Programm oder einfach ein Numerical Control (NC)-Programm oder NC-Code.

Bei Bedarf kann das Steuerprogramm 270 in dem CAM-Systems 230 gespeichert werden. Vor Beginn des Bearbeitungsprozesses 290 für das Werkstück 190 wird das Steuerprogramm 270 von dem CAM-System 230 in die SPS 155 der Werkzeugmaschine 150, 250 übertragen. Der für die Werkzeugmaschine 150, 250 zuständige Maschinenführer oder ein Arbeitsvorbereiter fügen in das Steuerprogramm 270 der Werkzeugmaschine 150, 250 manuell eine oder mehrere Anweisungen 280 oder Befehlszeilen ein, die beim Ablauf des Steuerprogramms 270 die Überwachungseinrichtung oder das Überwachungssystem 110, 210 starten.

Damit das Überwachungssystem 110, 210 die Überwachungsfunktion vernünftig bereitstellen kann, ist es jedoch notwendig, das Überwachungssystem 110, 210 auf den speziellen von dem Steuerprogramm 270 ausgeführten Bearbeitungsprozess 290 einzustellen oder zu parametrisieren. Dazu müssen an einer oder meistens mehreren Stellen innerhalb des Steuerprogramms 270 entsprechenden Anweisungen oder Befehlszeilen 280, die im Folgenden Überwachungsanweisungen genannt werden, in das Steuerprogramm 270 eingefügt werden.

In der lauten hektischen Umgebung einer Fertigungshalle, in der das Bedienpersonal mitunter unter erheblichem Zeitdruck steht, ist dies jedoch häufig ein schwieriges Unterfangen. Aber auch ohne zeitlichen Druck und unter Ausblendung der Umgebung ist es für das Bedienpersonal der Werkzeugmaschine 150, 250 vor Ort häufig schwierig den gesamten Bearbeitungsprozess 290 des zu fertigenden Werkstücks 190 in voraus vollständig zu überblicken.

Zudem ist es für eine zuverlässige Funktion des Überwachungssystems 110, 210 unerlässlich festzulegen, welche Sensorsignale in den Überwachungsvorgang einzubeziehen sind. Für jedes Signal ist ein Schwankungsintervall festzulegen, bei dessen Überschreiten ein entsprechender Alarm ausgelöst wird. Bei der Wahl eines zu kleinen Intervalls besteht das Risiko, dass Fehlalarme ausgelöst werden. Bei der Wahl eines zu großen zulässigen Schwankungsbereichs besteht die Gefahr, dass das Überwachungssystem 110, 210 auftretende Fehler nicht detektiert. Dies führt häufig dazu, dass das Bedienpersonal an der Werkzeugmaschine 150, 250 sich mit der Einstellung des Überwachungssystems 110, 210 überfordert fühlt. Im Ergebnis unterbleibt deshalb häufig das Einstellen oder Konfigurieren des Überwachungssystems 110, 210 für einen spezifischen Bearbeitungsprozess 290; oder die Parametrisierung erfolgt zumindest nicht optimal. Dies passiert insbesondere bei sehr langen Steuerprogrammen.

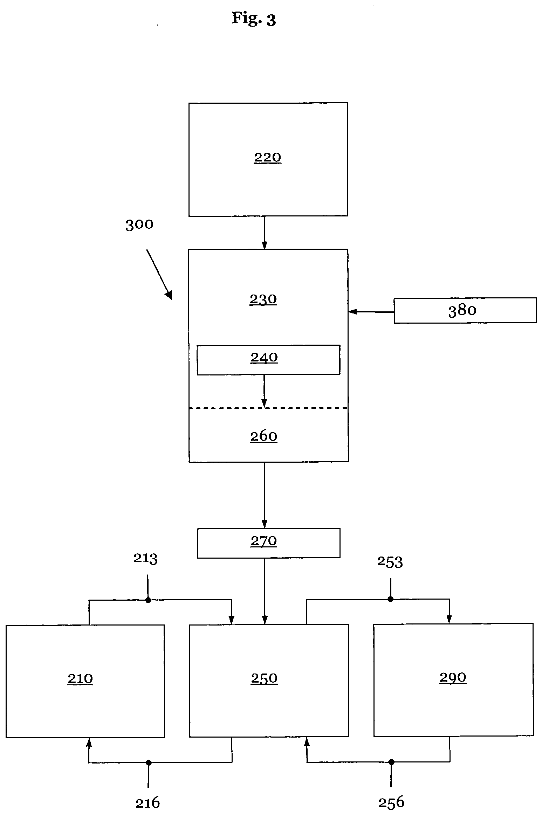

In der Fig. 3 ist schematisch dargestellt, wie die vorliegende Erfindung die Nachteile des gegenwärtigen Einstellens einer Überwachungsfunktion oder eines Überwachungssystems 110, 210 beseitigt. Die Anordnung 300 der Fig. 3 reproduziert die Anordnung 200 der Fig. 2 mit dem einzigen Unterschied, dass das Eingeben der Anweisungen 380 zum Einstellen des Überwachungssystems 110, 210 nicht an der Werkzeugmaschine 150, 250 selber erfolgt, sondern an dem CAM-System 230.

Damit wird das Implementieren der Anweisung(en) 280 zum Überwachen der Werkzeugmaschine 150, 250 von der Fertigungsumgebung der Fig. 1 in die Büroumgebung des CAM-Systems 230 verlagert. Während der Diskussion der Fig. 2 wurde ausgeführt, dass zur Generierung des CAM-Programms 240 die Bewegungen und Geschwindigkeiten aller Werkzeuge 164 bestimmt werden müssen. In dem Kontext der umfassenden Analyse des Bearbeitungsprozesses 290 ist es günstig, die Überwachung des Bearbeitungsprozesses 290 mit zu untersuchen.

Die vorliegende Erfindung sieht deshalb vor, die Anweisungen 380 zum Einstellen des Überwachungssystems 110, 210 nicht in das Steuerprogramm 270 einzufügen, sondern in das vorgelagerte CAM-Programm 240. Der Postprozessor 260 erzeugt, dann automatisch aus dem CAM-Programm 240 ein Steuerprogramm 270 für die Werkzeugmaschine 150, 250, das bereits alle Anweisungen einer optimal auf den jeweiligen Bearbeitungsprozess 290 angepassten Überwachungsfunktion enthält. Eine Eingabe von Anweisungen 280 für das Überwachungssystem 110, 210 an der Werkzeugmaschine 150, 250 entfällt.

Die meisten derzeit im Einsatz befindlichen CAM-Systeme 230 ermöglichen es über die reinen Bahnbewegungen hinaus, zusätzliche Anweisungen oder Befehle in das NC-Programm oder das Steuerprogramm 270 der Werkzeugmaschine 150, 250 einzufügen. Die Anweisungs- oder Befehlszeilen können manuell in das CAM-Programm 240 eingetragen werden oder mit Hilfe eines oder mehrerer Skripten erzeugt und in das NC-Programm oder das Steuerprogramm 270 eingefügt werden.

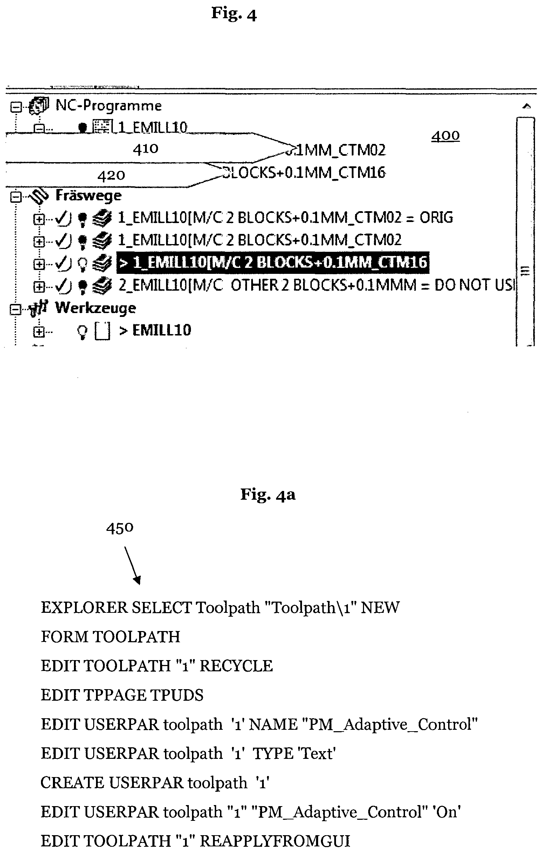

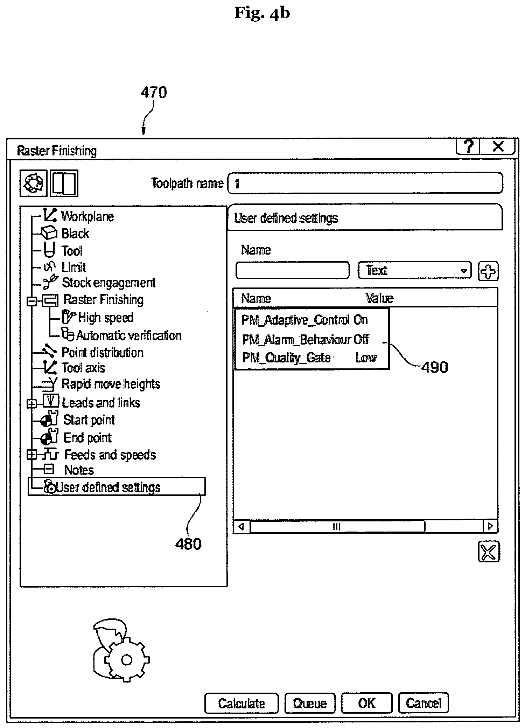

Die Fig. 4 veranschaulicht an einem kurzen Ausschnitt eines CAM-Programms 400 wie Anweisungen zum Überwachen eines Bearbeitungsprozesses 290 durch das Überwachungssystem 110, 210 in ein CAM-Programm eingefügt werden können. Die Erweiterungen oder Extensions 410, 420, die in der Fig. 4 die Kennungen 02 und 16 angeben, sind Kennungen verschiedener in das CAM-Programm 240, 400 eingefügter Anweisungen zum Einstellen des Überwachungssystems 110, 210. Im Detail werden die Extensions 410, 420 Werkzeugpfaden des CAM-Programms 240, 400 hinzugefügt.

Neben den in der Fig. 4 dargestellten Extensions 410 und 420 des CAM-Programms 240, 400 können die Anweisungen zum Konfigurieren des Überwachungssystems 110, 210 auch in Form von eigenen Programmzeilen beispielsweise in der Form Nutzer-definierter Eigenschaften oder User Defined Properties den entsprechen Werkzeugpfaden dem CAM-Programm 240, 400 hinzugefügt werden (in der Fig. 4 nicht dargestellt).

Die Fig. 4a gibt ein Makroskript 450 wieder, das darstellt, wie einem Werkzugpfad automatisch von extern eine neue Überwachungseigenschaft zugeordnet wird. Das in dem Beispiel der Fig. 4a dargestellte Makroskript 450 erstellt die Nutzer-definierte Eigenschaft PM_Adaptive _Control und weist dieser den Wert 'On' zu.

Die Fig. 4b veranschaulicht wie Nutzer-definierte Eigenschaften oder in englischer Sprache User Defined Settings in eine Dialog-Oberfläche 470 eines CAM-Programms 400 aufgenommen werden können. In dem Beispiel der Fig. 4b enthält das CAM-Programm 400 ein Untermenu 480 User Defined Settings. In dem Untermenu 480, dessen Inhalt 490 auf der rechten Seite der Dialog-Oberfläche 470 dargestellt ist, sind die Nutzer-definierten Eigenschaften PM_Adaptive_Control, PM_Alarm_Behaviour und PM_Quality_Gate aufgelistet, wobei in dem wiedergegebenen Beispiel die beiden erstgenannten Eigenschaften eingeschaltet sind und die zuletzt genannte Nutzer-definierte Eigenschaft ausgeschaltet ist.

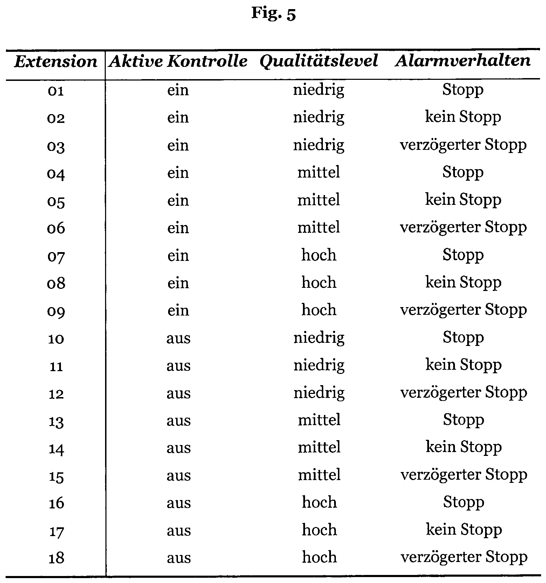

Die Fig. 5 zeigt eine Tabelle, in der neben den beiden in der Fig. 4 angegebenen Extensions 410 (mit der Kennung 02) und 420 (mit der Kennung 16) sechzehn weitere Extensions 410, 420 auflistet, die verschiedene weitere Beispiele von Konfigurationseinstellungen für das Überwachungssystem 110, 210 beschreiben. Die insgesamt 18 Extensions 410, 420 oder Kennungen, die in der beispielhaften Tabelle der Fig. 5 aufgeführt sind, umfassen drei verschiedene Merkmale oder Klassen von Features des Überwachungssystems 110, 210. Das Merkmal Alarmverhalten in der rechten Spalte der Tabelle der Fig. 5 weist drei verschiedene Werte oder Reaktionen auf einen von dem Überwachungssystem 110, 210 festgestellten Alarm auf. Bei einer Anweisung zum sofortigen Stopp der Werkzeugmaschine 150, 250 veranlasst das Überwachungssystem 110, 210 die SPS 155 der Werkzeugmaschine 150, 250 zu einem sofortigen Stopp des Hauptantriebs 160 sowie der Vorschubantriebe 170 und 180. In weiteren Unterscheidungen der Anweisung Stopp, die in der Tabelle der Fig. 5 nicht dargestellt sind, kann beispielsweise nur der Vorschubantrieb 170 oder 180 angehalten werden, während der Hauptantrieb 160 die Rotation des Werkzeugs 164 fortsetzt. Die Ausprägungen des Alarmverhaltens Stopp können - ebenfalls in der Tabelle der Fig. 5 nicht angegeben - ferner von dem eingesetzten Werkzeug, dem Bearbeitungsprozess und/oder dem Fortschritt innerhalb eines Bearbeitungsschrittes des Bearbeitungsprozess 290 abhängen.

Das Alarmverhalten kein Stopp bedeutet, es wird keine Alarmreaktion ausgelöst. In einem anderen Ausführungsbeispiel könnte das Alarmverhalten kein Stopp beispielsweise das Anzeigen einer Anzeige an dem Bedienfeld 185 der Werkzeugmaschine 150 bewirken, dass das eingesetzte Werkzeug 164 das Ende seiner Lebensdauer erreicht und deshalb nach maximal N-weiteren Einsätzen ausgetauscht werden sollte. Ferner könnte das Detektieren des Alarmverhaltens kein Stopp beispielsweise anzeigen, dass eine Temperatur gegen eine vorgegebene obere Grenze strebt und/oder die Zufuhr von Kühl- und/oder Schmiermittel sich einer kritischen unteren Grenze nähert.

Schließlich bewirkt das Auftreten eines verzögerten Stopps ein Anhalten der Werkzeugmaschine 150, 250 durch das Überwachungssystem 110, 210 zum Ende des gerade laufenden Bearbeitungsschrittes oder eines Bearbeitungsteilschrittes des Bearbeitungsprozesses 290.

Die in der Tabelle der Fig. 5 wiedergegebenen Alarme verzögerter Stopp und kein Stopp können unterschiedliche Ausprägungen aufweisen, die beispielsweise von dem verwendeten Werkzeug 164, der Art des Bearbeitungsschrittes, dem Fortschritt innerhalb eines Bearbeitungsschrittes und dem zu bearbeitenden Werkstück 190 abhängen. Die in der Fig. 5 angegebene Tabelle kann deshalb nur einen kleinen Ausschnitt aus einer ganzen Bibliothek oder Datenbank von Kennungen oder Extensions 410, 420 für Anweisungen zum Konfigurieren des Überwachungssystems 110, 210 für einen bestimmten Bearbeitungsprozess 290 angeben.

Das in dem Beispiel der Fig. 5 in der dritten Spalte der Tabelle wiedergegebene Merkmal Qualitätslevel umfasst ebenfalls drei verschiedene Qualitätsstufen für einen Bearbeitungsschritt eines Bearbeitungsprozesses 290. Die Fig. 6 zeigt schematisch einen Bearbeitungsschritt, der mit der Einstellung eines niedrigen Qualitätslevels durchgeführt wird. Der Bearbeitungsschritt wird mit einer oberen Hüllkurve 610 überwacht. Die zur Überwachung des Bearbeitungsschritts eingesetzte Größe 620, wie etwa ein an der Spindel 162 mit Hilfe des Sensors 120 gemessenes Drehmoment weist an jeder Stelle einen großen Abstand zu der Hüllkurve 610 auf. Damit würde auch eine größere Variation der Höhe des Drehmoments während des in der Fig. 6 dargestellten Bearbeitungsschritts nicht zum Auslösen eines Alarms führen.

Die Fig. 7 veranschaulicht einen Bearbeitungsschritt, bei dem ein hoher Qualitätslevel in dem Überwachungssystem 110, 210 eingestellt ist. Die obere Hüllkurve 710 weist nur noch einen geringen Abstand von der zur Überwachung des Bearbeitungsschritts eingesetzten Größe 720 auf. Da der in der Fig. 7 wiedergegebene Bearbeitungsschritt den erwarteten Verlauf nimmt, führt das Konfigurieren des Überwachungssystems 110, 210 mit einem hohen Qualitätslevel nicht zu einer Alarmsituation.

Darüber hinaus weist das Merkmal Qualitätslevel der Tabelle der Fig. 5 eine mittlere Qualitätsstufe auf, die zwischen den in den Figuren 6 und 7 gezeigten Qualitätspegeln liegt.

Die Einteilung des Merkmals Qualitätslevel in drei Stufen ist lediglich beispielhalft. Es ist natürlich möglich, eine andere Einteilung in mehr oder weniger Stufen vorzunehmen. Zudem ist es, wie oben am Beispiel des Alarmverhaltens erläutert, möglich, die Einteilungen des Merkmals Qualitätslevel von dem durchzuführenden Bearbeitungsschritt, der Bearbeitungsart und/oder dem zu bearbeitenden Werkstück 190 abhängig zu machen, um nur einige Beispiele zu nennen.

Das in der zweiten Spalte der Tabelle der Fig. 5 gezeigte Merkmal aktive Kontrolle kann eingeschaltet oder ausgeschaltet werden. Der Zustand eingeschalteter aktiver Kontrolle wird im Folgenden auch aktiver, adaptiver Überwachungsmodus genannt und der Zustand ausgeschalteter aktiver Kontrolle wird im Folgenden auch als passiver Überwachungsmodus bezeichnet.

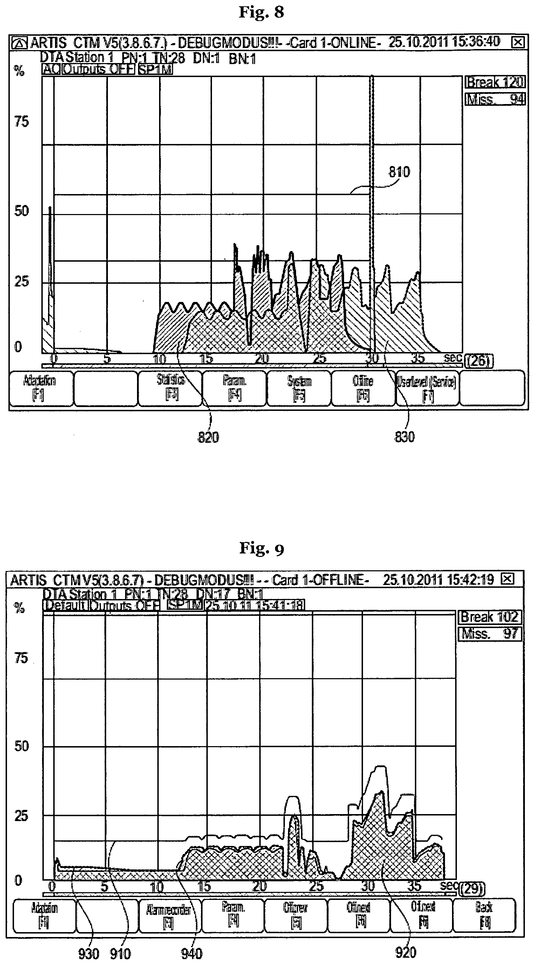

Die Fig. 8 zeigt ein Beispiel eines Bearbeitungsschritts eines Bearbeitungsprozesses 290 für ein zu fertigendes Werkstück 190, der mit eingeschalteter aktiver Kontrolle durchgeführt wurde. Der Bearbeitungsschritt wird ausschließlich durch einen sehr hoch gewählten, festen oberen Grenzwert 810 überwacht. Die Kurvenverläufe 820 und 830 repräsentieren zwei verschiedene Beispiele der zur Überwachung verwendeten Größe, die während der Ausführung eines Bearbeitungsschrittes aufgenommen wurden. Wie aus den unterschiedlichen Anfangs- und Endzeitpunkten der Kurvenverläufe 820 und 830 zu ersehen ist, unterliegt der im aktiven adaptiven Überwachungsmodus durchgeführte Bearbeitungsschritt einer verkürzten Taktzeit.

In der Fig. 9 sind ähnlich wie in der Fig. 8 drei Bearbeitungsschritte eines Bearbeitungsprozesses 290 dargestellt, bei denen die aktive Kontrolle ausgeschaltet ist, d.h. der passive Überwachungsmodus eingeschaltet ist. Darüber hinaus wird der Bearbeitungsschritt nicht wie in der Fig. 8 durch eine zeitlich invariante obere Grenze 810 überwacht, sondern durch eine obere Hüllkurve 910 mit einem hohen Qualitätslevel. Die drei in der Fig. 9 dargestellten Bearbeitungsschritte 920, 930 und 940 weisen nur noch eine minimale zeitliche Schwankung auf. Ferner variiert die Höhe der zur Überwachung herangezogenen Größe zwischen den drei Kurvenverläufen 920, 930 und 940 der Wiederholungen des Bearbeitungsschrittes nur wenig.

Der in der Fig. 8 dargestellte aktive adaptive Überwachungsmodus und der in der Fig. 9 veranschaulichte passive Überwachungsmodus haben entgegengesetzte Zielsetzungen. Der aktive adaptive Überwachungsmodus hat primär das Ziel die Zykluszeit des Bearbeitungsschritts zu minimieren. Dafür werden größere Schwankungen im zeitlichen Ablauf der zur Überwachung eingesetzten Größe in Kauf genommen. Der passive Überwachungsmodus hat hingegen die Zielsetzung, die Variation zwischen den einzelnen Ausführungen des überwachten Bearbeitungsschritts möglichst klein zu halten. Die Zykluszeit des in der Fig. 8 dargestellten Bearbeitungsschritts ist etwa 20 % geringer verglichen mit der Ausführung des in der Fig. 9 gezeigten passiven Überwachungsmodus.

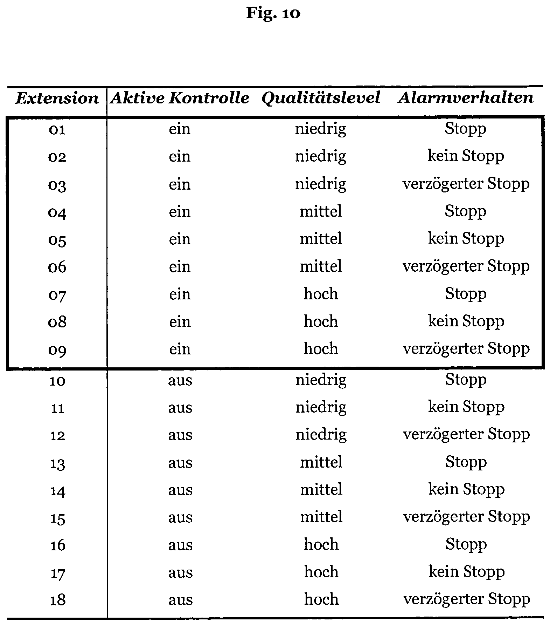

Es gibt Anwendungsbereiche, in denen der aktive, adaptive Überwachungsmodus für zu fertigende Werkstücke 190 nicht eingesetzt werden darf. Ein Beispiel dafür ist die Luftfahrtindustrie. Hier darf ein einmal zertifizierter Prozess nicht mehr verändert werden. Die Fig. 10 veranschaulicht wie sich dadurch Anzahl der zulässigen Kennungen oder Extensions 410, 420 der in der Fig. 5 dargestellten Tabelle halbiert. Die schwarz hinterlegten Kennungen oder Extensions 410, 420 mit den Kennungen 01 bis 09, die den aktiven adaptiven Überwachungsmodus repräsentieren, sind in diesem Fall nicht erlaubt.

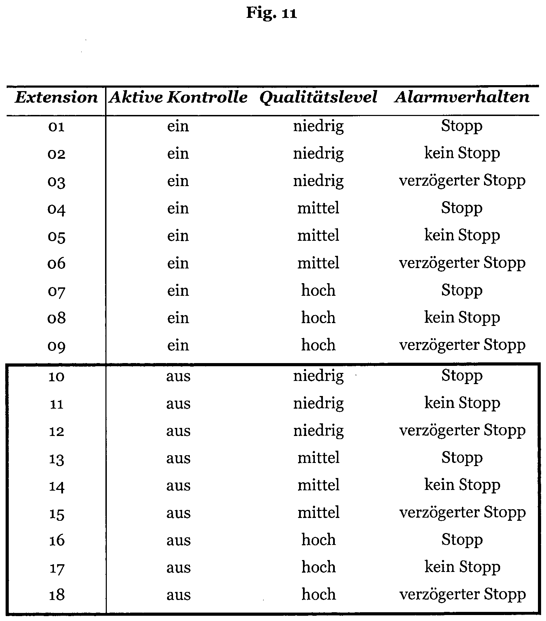

Andererseits existieren Einsatzfelder oder Technologiebereiche, die unter enormem wirtschaftlichen Druck stehen. In denen eine möglichst geringe Zykluszeit jedes einzelnen Bearbeitungsschritts des Bearbeitungsprozesses 290 oberste Priorität hat. Ein Beispiel hierfür ist die Automobilindustrie. In diesem Fall ist es notwendig mit eingeschaltetem aktiven, adaptiven Überwachungsmodus zu arbeiten. Die Fig. 11 symbolisiert den Teil der Tabelle der Fig. 5 aus dem dann noch die Extensions 410, 420 zum Einstellungen des Überwachungssystems 110, 210 ausgewählt werden können.

In der in der Fig. 5 repräsentierten Tabelle ist das Merkmal aktive Kontrolle digital, d.h. es weist nur zwei Werte oder Zustände auf. Es ist jedoch auch möglich, dass jeder Einsatzbereich oder Anwendungsbereich des gefertigten Werkstücks 190 eine eigene Kennzeichnung des Merkmals aktive Kontrolle erfordert. Die Zahl der Zeilen in der Tabelle der Fig. 5 würde sich entsprechend vervielfachen (in der Fig. 5 nicht gezeigt).

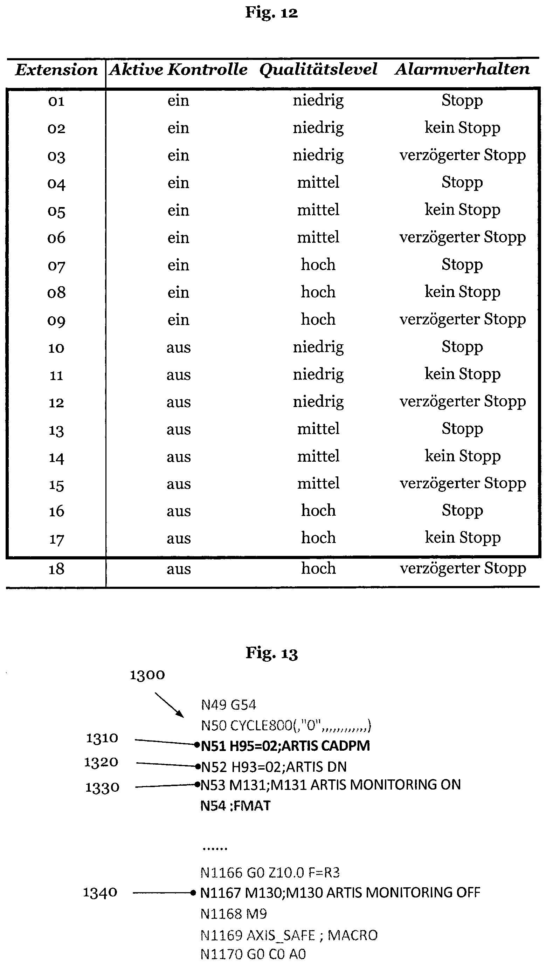

Neben den Anwendungsbereichen der gefertigten Werkstücke 190 beeinflusst die Art des Bearbeitungsprozesses 290 die Konfiguration des Überwachungssystems 110, 210. Bei einem Gewindeschneideprozess darf beispielsweise im Falle des Auftretens eines Fehlers, der einen Alarm zum sofortigen Stopp der Werkzeugmaschine 150, 250 auslöst, die Hauptantrieb 160 und sein Vorschub 170 nicht sofort angehalten werden. Beim erneuten Starten des Hauptantriebs 160 und des Vorschubs 170 zum Entfernen des Gewindeschneiders aus dem Werkstück 190 würde der Gewindeschneider brechen. Die Fig. 12 zeigt, dass dadurch ein Gewindeschneideprozess mit nur einer Extension 410, 420, bzw. ausschließlich mit der Kennung 18 der Tabelle der Fig. 5 ausgeführt werden kann.

Die Tabelle der Fig. 5 weist drei Merkmale auf, wobei zwei dieser Merkmale jeweils drei verschiedene Werte annehmen können. Ein Merkmal (aktive Kontrolle) weist zwei Werte auf. Insgesamt umfasst damit die Tabelle der Fig. 5 achtzehn (2x3x3) verschiedene Kombinationen der drei Merkmale. Neben den drei in der Tabelle der Fig. 5 aufgelisteten Merkmalen kann es jedoch notwendig oder wünschenswert sein, weitere Größen zum Einstellen des Überwachungssystems 110, 210 zu benutzen. Wie bereits kurz mit Bezug auf die Fig. 12 angesprochen, hat die Bearbeitungsart einen erheblichen Einfluss auf die Konfiguration oder Parametrisierung des Überwachungssystems 110, 210. Die Bearbeitungsart kann deshalb als ein eigenes Merkmal in die Tabelle der Fig. 5 aufgenommen werden (in der Fig. 5 nicht gezeigt).

Wie in dem Beispiel der Fig. 12 oben ausgeführt, kann der Werkzeugtyp ebenfalls Auswirkungen auf die Konfiguration des Überwachungssystems 110, 210 haben. Zudem kann eine variierende Größe des Werkzeugs 164 es erforderlich machen, die Überwachung eines Bearbeitungsschritts entsprechend anzupassen. Beispielsweise kann eine taktile Analyse eines großen Werkzeugs zum Bestimmen eines vorhandenen Werkzeugs 164 geeignet sein, während bei der Anwendung dieser Untersuchungsmethode auf ein kleines Werkzeug 164 die Gefahr einer Beschädigung oder gar einer Zerstörung des Werkzeugs 164 besteht. Bei berührungslosen Analyseverfahren besteht diese Gefahr hingegen nicht. Somit kann es sinnvoll sein, den Werkzeugtyp und die Werkzeuggröße als weitere eigenständige Merkmale in der Tabelle der Fig. 5 aufzunehmen, die die verschiedenen Einstelloptionen des Überwachungssystems 110, 210 in Form von Extensions 410, 420 für ein CAM-Programm 240, 400 zusammenfasst.

Überdies kann der Fortschritt innerhalb eines Bearbeitungsschritts in dem Bearbeitungsprozess 290 Änderungen an den Einstellungen des Überwachungssystems 110, 210 erforderlich machen. Zum Beispiel kann ein erster grober Teilabtrag in einem Fräsprozessschritt ohne Überwachung oder nur mit einer Überwachung mittels eines festen oberen Grenzwerts durchgeführt werden (siehe Fig. 8). Der anschließende Teilschritt zum Herstellen der vordefinierten Oberflächenkontur des Werkstücks 190 erfordert andererseits eine Überwachung, die bereits eine geringe Abweichung von einem vorbestimmten Prozessverlauf detektiert.

Im Ergebnis stellt somit die Tabelle der Fig. 5 nur einen kleinen beispielhaften Ausschnitt aus einer ganzen Bibliothek von Einstellungsoptionen für das Überwachungssystem 110, 210 dar.

In einem möglichen Ablauf der Generierung eines Steuerprogramms 270 für die Werkzeugmaschine 150, 250 und das angeschlossene Überwachungssystem 110, 210 analysiert ein Skript oder ein Analyse-Skript, das beispielsweise von dem Prozessor des CAM-Systems 230 ausgeführt wird, ein CAM-Programm 240, 400 und fügt anhand der Tabelle der Fig. 5 oder allgemeiner durch Auswählen aus einer Bibliothek Extensions 410, 420 den entsprechenden Programmzeilen des CAM-Programms 240, 400 hinzu. Alternativ oder parallel dazu fügt das Analyse-Skript eigene Programmzeilen in das CAM-Programm 240, 400 ein (in der Fig. 4 nicht gezeigt), die Einstelloptionen des Überwachungssystems 110, 210 beschreiben. Die Programmzeilen bestimmen Nutzer-definierte Eigenschaften, die in Programmteile des CAM-Programms 240, 400 eingefügt werden, die die entsprechenden Werkzeugpfade beschreiben.

Wie in der Fig. 3 schematisch dargestellt, erzeugt der Postprozessor 260 in automatisierter Form ein Steuerprogramm 270 für die Werkzeugmaschine 150, 250. Parallel oder sequentiell zu dem Postprozessor 260 identifiziert beispielsweise ein Einfüge-Skript die Extensions 410, 420 des CAM-Programms 240, 400 und fügt in das Steuerprogramm 270 für die Werkzeugmaschine 150, 250 eine oder mehrere Überwachungsanweisungen ein, die das Überwachungssystem 110, 210 für den Bearbeitungsprozess 290 konfigurieren.

Die Fig. 13 zeigt einen Ausschnitt aus einem Steuerprogramm 1300, das sich auf die Extension 410 des CAM-Programms 400 der Fig. 4 bezieht. Die Bedeutung der Extension 410 mit der Kennung 02 ist oben während der Diskussion der Tabelle der Fig. 5 ausführlich erläutert werden. In dem Beispiel der Fig. 13 bewirkt die Extension 410 mit der Kennung 02 das Einfügen der vier maschinenspezifischen Überwachungsanweisungen 1310, 1320, 1330, 1340 in das Steuerprogramm 1300. Die Überwachungsanweisungen 1310-1340 sind in dem Programmausschnitt 1300 der Fig. 13 schwarz hervorgehoben, während die anderen Anweisungen des Programmausschnittes 1300, die sich auf die Steuerung der Werkzeugmaschine 150, 250 beziehen, in der Fig. 13 grau wiedergegeben werden.

Die Überwachungsanweisungen 1310 und 1320 beschreiben Anweisungen der H-Funktion und geben die Konfiguration an, mit der überwacht werden soll.

Die M-Funktion M131 der Überwachungsanweisung 1330 der Fig. 13 schaltet die aktive Kontrolle (siehe zweite Spalte der Tabelle der Fig. 5) ein und die M-Funktion der Überwachungsanweisung 1340 schaltet die aktive Kontrolle am Ende des Bearbeitungsschritts des Bearbeitungsprozesses 290 wieder aus.

Die Zuweisung der Überwachungsanweisungen 1310, 1320, 1330, 1340 zu den Extensions 410, 420 (mit den Kennungen 01 bis 18 in der Tabelle der Fig. 5) des CAM-Programms 240, 400 können in einer weiteren oder zweiten Bibliothek gespeichert sein, auf die der Postprozessor 260 oder ein Einfüge-Skript zugreifen kann. Alternativ kann ein auf dem Prozessor des CAM-Systems 230 ablaufendes Applikationsprogramm aus den identifizierten Extensions 410, 420 des CAM-Programms 240, 400 die zugehörigen Überwachungsanweisungen 1310-1340 bestimmen. Anstatt auf dem Prozessor des CAM-Systems 230 abzulaufen, kann das Applikationsprogramm auch auf einem externen Prozessor oder Computersystem ausgeführt werden. Schließlich ist es auch denkbar, einen Teil der Überwachungsanweisungen 1310-1340 aus einer Bibliothek zu beziehen und einen zweiten Teil, wie oben erläutert, mittels eines Applikationsprogramms zu ermitteln. Das Applikationsprogramm kann beispielsweise in Form einer Dynamic Link Library (DLL) ausgeführt werden.

In den bisher beschriebenen Ausführungsbeispielen eines in der vorliegenden Anmeldung definierten Verfahrens zum Bereitstellen einer Überwachungsfunktion für einen von einer Werkzeugmaschine 150, 250 durchgeführten Bearbeitungsprozesses 290 erhält das Überwachungssystem 110, 210 mittels der Überwachungsanweisung(en) 1310-1340 des Steuerprogramms 270, 400 genaue Instruktion, wie es die einzelnen Bearbeitungsschritte des Bearbeitungsprozesses 290 überwachen muss. Den Überwachungsanweisungen 1310-1340 folgend, führt das Überwachungssystem 110, 210 die vorgegebenen Einstellungen durch und überwacht anschließend die einzelnen Bearbeitungsschritte des Bearbeitungsprozesses 290.

Moderne Überwachungssysteme 110, 210 weisen jedoch einen eigenen Prozessor und einen nichtflüchtigen Speicher auf (in der Fig. 3 nicht gezeigt). Damit sind moderne Überwachungssysteme 110, 210 in der Lage ihre Einstellungen oder Konfigurationsdaten teilweise selbst zu bestimmen.

In einer alternativen Ausführung zum Bereitstellen einer Überwachungsfunktion ist es deshalb möglich, in den Extensions 410, 420 des CAM-Programms 240, 400 Parameterwerte für das Einstellen der Überwachungsfunktion sowie die Anweisung an das Überwachungssystem 110, 210 zu übertragen, den entsprechenden Teil des Steuerprogramms 270, 1300 zu analysieren. Das Überwachungssystem 110, 210 kann anhand dieser Vorgaben die entsprechenden Einstellungen für die einzelnen Bearbeitungsschritte des Bearbeitungsprozesses 290 selbst bestimmen. Beispielsweise kann die im Steuerprogramm 270, 1300 niedergelegte Anweisung 1310-1340 zum Bewegen einer Achse (zum Beispiel des Vorschubantriebs 170 des Haupantriebs 160 in der Fig. 1) zu der Signalauswahl dieser Achse (C-Achse) für die Überwachung führen. Dazu übersetzt der Postprozessor 260 die Extensions 410, 420 des CAM-Programms 240, 400 in maschinenspezifische Anweisungen 1310-1340 des Steuerprogramms 270, 1300.

Zum Beispiel kann die Bewegungsart jeder Achse der Werkzeugmaschine 150, 250 wie positiv schnell (Go), positiv langsam (Gx), keine Bewegung (Gx), negativ langsam (Gx) und schließlich negativ schnell (Go) in einer Maske in dem Überwachungssystem 110, 210 hinterlegt werden und als Unterscheidungshilfe bei der Analyse des entsprechenden Teils des Steuerprogramms 270, 1300 durch das Überwachungssystem 110, 210 herangezogen werden. Für andere Funktionen des Überwachungssystems 110, 210 können ähnliche Masken oder Tabellen in dem Überwachungssystem 110, 210 abgelegt werden und zum Analysieren des Steuerprogramms 270, 1300 eingesetzt werden.

Aus einem in dem Steuerprogramm 270, 1300 angeordneten Grobbearbeitungsteilschritt (Schruppen) für die Werkzeugmaschine 150, 250 bestimmt das Überwachungssystem 110, 210 eine Überwachung mit weiten Grenzen, wie etwa der in der Fig. 8 angegebenen festen oberen Grenze 810.

Umgekehrt führt hingegen ein entsprechender Feinbearbeitungsteilschritt (Schlichten) zum Bestimmen einer Überwachung mit engen Grenzen durch das Überwachungssystem 110, 210, wie beispielhaft durch die oberen Hüllkurven 710 der Fig. 7 bzw. 910 der Fig. 9 veranschaulicht.

Die zur Überwachung einsetzten Grenzen (beispielsweise feste untere und/oder feste obere Grenzen oder untere und/oder obere Hüllkurven können dem in den Überwachungsanweisungen 1310-1340 dem Überwachungssystem 110, 210 als Grenzwerte oder als Parameterwerte übertragen werden. Im zuletzt genannten Fall bestimmt das Überwachungssystem 110, 210 aus den Parameterwerten die zur Überwachung verwendeten Grenzwerte.

Dem Überwachungssystem 110, 210 können ferner der verwendete Werkzeugtyp und die Größe des verwendeten Werkzeugs 164 anhand von Werkzeugnummern übermittelt werden. Die Bearbeitungsart, sowie der Fortschritt innerhalb eines Bearbeitungsschritts (Grobbearbeitungsteilschritt oder Schrubben bzw. Feinbearbeitungsteilschritt oder Schlichten) können dem Überwachungssystem 110, 210 in Form eines Nummernschlüssels übertragen werden.

Überdies ist es möglich, dem Überwachungssystem 110, 210 via Extensions 410, 420 des CAM-Programms 240, 400 und eingefügten Überwachungsanweisungen 1310-1340 des Steuerprogramms 270, 1300 die Parameter für die Regeleigenschaften des Überwachungssystems 110, 210 zu übermitteln. Das Überwachungssystem 110, 210 berechnet aus diesen Vorgaben auf der Basis beispielsweise eines in seinem Speicher abgelegten Algorithmus die für den jeweiligen Bearbeitungsschritt des Bearbeitungsprozesses 290 günstigsten Einstellungen.

In dem zuletzt ausgeführten Beispiel führt das Überwachungssystem 110, 210 nicht sklavisch die Überwachungsanweisungen 1310-1340 aus, sondern konfiguriert sich aufgrund der durch die Überwachungsanweisungen 1310-1340 übertragenen Parameterwerte und durch Analyse des Steuerprogramms 270, 1300 weitgehend selbst. Dadurch kann zumindest ein Teil der in der ersten Bibliothek gespeicherten Daten oder der durch das Applikationsprogramm ermittelten Daten durch das Überwachungssystem 110, 210 selbst bestimmt werden und muss nicht übertragen werden. Darüber hinaus ist es möglich, jede Mischform zwischen dem zuerst beschriebenen Beispiel (das Überwachungssystem 110, 210 setzt die Überwachungsanweisungen 1310-1340 um) und dem zuletzt erläuterten Ausführungsbeispiel (das Überwachungssystem 110, 210 erhält Parameterwerte und konfiguriert sich anhand dieser Werte und des Steuerprogramms 270, 1300 weitgehend selbst) zu realisieren.

Das in der vorliegenden Beschreibung ausgeführte Verfahren zum Bereitstellen einer Überwachungsfunktion weist zwei wichtige Vorzüge auf: (i) Die Einstellungen der Überwachungsfunktion erfolgen durch Experten in der CAM-Umgebung anstelle des Einstellens der Überwachungsfunktion an der Werkzeugmaschine selber. (ii) Das definierte Verfahren ermöglicht ein weitgehend automatisiertes Einstellen der Überwachungsfunktion.

## Patentansprüche

1. Verfahren zum automatisierten Bereitstellen einer Überwachungsfunktion für einen Bearbeitungsprozess (290), der von einer Werkzeugmaschine (150, 250) durchgeführt werden soll, mit den folgenden Schritten:
a. Analysieren eines Computer-Aided Manufacturing, CAM, Programms (240, 400) des Bearbeitungsprozesses (290) mit Hilfe eines Postprozessors (260) auf Bearbeitungsschritte, die überwacht werden sollen; und
b. Einfügen zumindest einer Überwachungsanweisung (1310, 1320, 1330, 1340) in ein Steuerprogramm (270, 1300) der Werkzeugmaschine (150, 250) durch den Postprozessor (260), die beim Durchführen des Bearbeitungsprozesses (290) ausgeführt wird.

2. Verfahren nach Anspruch 1, wobei das Analysieren des CAM-Programms (240,400) das Ausführen zumindest eines Analyse-Skripts durch den Postprozessor (260) umfasst.

3. Verfahren nach Anspruch 1 oder 2, wobei der Postprozessor (260) im Schritt a. Extensions (410, 420) von Werkzeugpfaden des CAM-Programms (240, 400) und/oder in Werkzeugpfaden des CAM-Programms (240, 400) vorhandene Nutzer-definierte Eigenschaften auswertet.

4. Verfahren nach Anspruch 3, wobei die Extensions (410, 420) der Werkzeugpfade des CAM-Programms (240, 400) und/oder die in Werkzeugpfaden des CAM-Programms vorhandenen Nutzer-definierten Eigenschaften einen Betriebsmodus des Überwachungssystems (110, 210) und/oder eine Qualitätseinstellung des Überwachungssystems (110, 210) und/oder ein Erzeugen eines Alarmereignisses betreffen.

5. Verfahren nach Anspruch 3 oder 4, wobei die Extensions (410, 420) der Werkzeugpfade des CAM-Programms (240, 400) und/oder die in Werkzeugpfaden des CAM-Programms (240, 400) vorhandenen Nutzer-definierten Eigenschaften beim Erzeugen des CAM-Programms (240, 400) aus CAD Daten hinzugefügt werden.

6. Verfahren nach einem der Ansprüche 3 - 5, wobei die Extensions (410, 420) der Werkzeugpfade des CAM-Programms (240) und/oder die in Werkzeugpfaden des CAM-Programms (240, 400) vorhandenen Nutzer-definierten Eigenschaften aus einer ersten Bibliothek ausgewählt werden.

7. Verfahren nach einem der vorhergehenden Ansprüche, wobei das Einfügen der zumindest einen Überwachungsanweisung (1310, 1320, 1330, 1340) im Schritt b. das Ausführen zumindest eines Einfüge-Skripts durch den Postprozessor (260) umfasst.

8. Verfahren nach einem der vorhergehenden Ansprüche, wobei das Einfügen der zumindest einen Überwachungsanweisung (1310, 1320, 1330, 1340) in das Steuerprogramm (270, 1300) das Einfügen zumindest einer H-Funktion und/oder zumindest einer M-Funktion in das Steuerprogramm (270, 1300) umfasst.

9. Verfahren nach Anspruch 7 oder 8, wobei jeder Extension (410, 420) des CAM-Programms (240, 400) eindeutig zumindest eine Überwachungsanweisung (1310, 1320, 1330, 1340) zum Einfügen in das Steuerprogramm (270, 1300) der Werkzeugmaschine zugeordnet (150, 250) ist.

10. Verfahren nach einem der Ansprüche 1-3 und 7-9, wobei die zumindest eine Überwachungsanweisung (1310, 1320, 1330, 1340) Grenzwerte für einen Variationsbereich einer Größe übergibt, die das Überwachungssystem (110, 210) zur Überwachung verwendet und/oder Parameterwerte zum Bestimmen von Grenzwerten übergibt, aus denen das Überwachungssystem (110, 210) die Grenzwerte ermittelt.

11. Verfahren nach einem der Ansprüche 1-3 und 7-10, ferner aufweisend Einstellen von Regeleigenschaften des Überwachungssystems (110, 210) nach Vorgaben, die von der zumindest einen Überwachungsanweisung (1310, 1320, 1330, 1340) an das Überwachungssystem (110, 210) übergeben werden.

12. Verfahren nach einem der Ansprüche 1-3 und 7-11, ferner aufweisend den Schritt des Aktivierens Werkzeug-bezogener Einstellungen auf der Grundlage von Werkzeugnummern, die durch die zumindest eine Überwachungsanweisung (1310, 1320, 1330, 1340) an das Überwachungssystem (110, 210) übertragen werden.

13. Vorrichtung zum automatisierten Bereitstellen einer Überwachungsfunktion für einen Bearbeitungsprozess (290), der von einer Werkzeugmaschine (150, 250) durchgeführt werden soll, aufweisend:
a. Mittel zum Analysieren eines Computer-Aided Manufacturing, CAM, Programms (240, 400) des Bearbeitungsprozesses (290) mit Hilfe eines Postprozessors (260) auf Bearbeitungsschritte, die überwacht werden sollen; und
b. Mittel zum Einfügen zumindest einer Überwachungsanweisung (1310, 1320, 1330, 1340) in ein Steuerprogramm (270, 1300) der Werkzeugmaschine (150, 250) durch den Postprozessor (260), die beim Durchführen des Bearbeitungsprozesses (290) ausgeführt wird.

14. Vorrichtung nach Anspruch 13, wobei die Vorrichtung ausgebildet ist, um ein Verfahren nach einem der Ansprüche 1 bis 12 auszuführen.

15. Computerprogramm mit Anweisungen zum Durchführen aller Schritte des Verfahrens zum automatisierten Bereitstellen einer Überwachungsfunktion für einen Bearbeitungsprozess (290) nach einem der Ansprüche 1 bis 12, wenn das Computerprogramm in der Vorrichtung nach Anspruch 13 ausgeführt wird.

## Claims

1. A method for an automated provision of a monitoring function for a machining process (290) to be executed by a machine tool (150, 250), the method comprising the following steps:
a. analyzing a computer-aided manufacturing, CAM, program (240, 400) of the machining process (290) by means of a postprocessor (260) in order to determine processing steps to be monitored; and
b. inserting at least one monitoring instruction (1310, 1320, 1330, 1340) into a control program (270, 1300) of the machine tool (150, 250) by means of the postprocessor (260) which is executed during the machining process (290).

2. The method according to claim 1, wherein analyzing the control program (240, 400) comprises executing at least one analysis script by the postprocessor (260).

3. The method according to claim 1 or 2, wherein, in step a., the postprocessor (260) evaluates extensions (410, 420) of tool paths of the CAM program (240, 400) and / or user defined properties which are available in the tool paths of the CAM program (240, 400).

4. The method according to claim 3, wherein the extensions (410, 420) of the tool paths of the CAM program (240, 400) and / or user defined properties which are available in the tool paths of the CAM program relate to a mode of operation of the monitoring system (110, 210), and / or to a quality setting of the monitoring system (110, 210), and / or to a generation of an alarm event.

5. The method according to claim 3 or 4, wherein the extensions (410, 420) of the tool paths of the CAM program (240, 400) and / or the user defined properties which are available in the tool paths of the CAM program (240, 400) are added to the CAM program (240, 400) from CAD data when generating the CAM program (240, 400).

6. The method according to any one of the claims 3-5, wherein the extensions (410, 420) of the tool paths of the CAM program (240) and / or of the user defined properties which are available in the tool paths of the CAM program (240, 400) are selected from a first library.

7. The method according anyone of the preceding claims, wherein, in step b., inserting the at least one monitoring instruction (1310, 1320, 1330, 1340) comprises executing at least one insertion script by the postprocessor (260).

8. The method according to anyone of the preceding claims, wherein inserting the at least one monitoring instruction (1310, 1320, 1330, 1340) into the control program (270, 1300) comprises inserting at least one H function and / or at least one M function into the control program (270, 1300).

9. The method according to claim 7 or 8, wherein each extension (410, 420) of the CAM program (240, 400) is unambiguously associated with a respective at least one monitoring instruction (1310, 1320, 1330, 1340) for insertion into the control program (270, 1300) of the machine tool (150, 250).

10. The method according to anyone of the claims 1 - 3 and 7 - 9, wherein the at least one monitoring instruction (1310, 1320, 1330, 1340) transfers limiting values for a variation range of a quantity which uses the monitoring system (110, 210) for monitoring and / or wherein the at least one monitoring instruction (1310, 1320, 1330, 1340) transfers parameter values for determining limiting values from which the monitoring system (110, 210) determines limiting values.

11. The method according to anyone of the claims 1 - 3 and 7 - 10, further comprising setting up control properties of the monitoring system (110, 210) according to specifications which are transferred from the at least one monitoring instruction (1310, 1320, 1330, 1340) to the monitoring system (110, 210).

12. The method according to any one of the claims 1 - 3 and 7 - 11, further comprising the step of activating tool related settings on the basis of tool numbers which are transmitted to the monitoring system (110, 210) by the at least one monitoring instruction (1310, 1320, 1330, 1340).

13. An apparatus for an automated provision of a monitoring function for a machining process (290) to be executed by a machine tool (150, 250), comprising:
a. Means for analyzing a computer-aided manufacturing, CAM, program (240, 400) of the machining process (290) by means of a postprocessor (260) in order to determine processing steps to be monitored; and
b. Means for inserting at least one monitoring instruction (1310, 1320, 1330, 1340) in a control program (270, 1300) of the machine tool (150, 250) by means of the postprocessor (260) which is executed during the machining process (290).

14. The method according to claim 13, wherein the apparatus is adapted to execute a method according to one of the claims 1 to 12.

15. A computer program having instructions for executing all steps of the method for an automated provision of a monitoring function for a machining process (290) according to one of the claims 1 - 12 when the apparatus of claim 13 executes the computer program.

## Revendications

1. Procédé de mise à disposition automatisée d'une fonction de surveillance pour un processus d'usinage (290) qui doit être réalisé par une machine-outil (150, 250), comprenant les étapes suivantes :
a. l'analyse d'un programme de fabrication assistée par ordinateur, FAO, (240, 400) du processus d'usinage (290), à l'aide d'un postprocesseur (260), portant sur des étapes d'usinage qui doivent être surveillées ; et
b. l'insertion d'au moins une instruction de surveillance (1310, 1320, 1330, 1340) dans un programme de commande (270, 1300) de la machine-outil (150, 250) par l'intermédiaire du postprocesseur (260), laquelle sera exécutée lors de la réalisation du processus d'usinage (290).

2. Procédé selon la revendication 1, dans lequel l'analyse du programme de FAO (240, 400) comprend l'exécution d'au moins un script d'analyse par le postprocesseur (260).

3. Procédé selon la revendication 1 ou 2, dans lequel le postprocesseur (260) analyse à l'étape a. des extensions (410, 420) de trajets d'outil du programme de FAO (240, 400) et/ou des propriétés présentes sur des trajets d'outil du programme de FAO (240, 400) et définies par l'utilisateur.

4. Procédé selon la revendication 3, dans lequel les extensions (410, 420) des trajets d'outil du programme de FAO (240, 400) et/ou les propriétés présentes sur des trajets d'outil du programme de FAO et définies par l'utilisateur concernent un mode de fonctionnement du système de surveillance (110, 210) et/ou un réglage qualitatif du système de surveillance (110, 210) et/ou une génération d'un évènement d'alarme.

5. Procédé selon la revendication 3 ou 4, dans lequel les extensions (410, 420) des trajets d'outil du programme de FAO (240, 400) et/ou les propriétés présentes sur des trajets d'outil du programme de FAO (240, 400) et définies par l'utilisateur sont ajoutées lors de la génération du programme de FAO (240, 400) à partir de données de CAO.

6. Procédé selon l'une des revendications 3 à 5, dans lequel les extensions (410, 420) des trajets d'outil du programme de FAO (240) et/ou les propriétés présentes sur des trajets d'outil du programme de FAO (240, 400) et définies par l'utilisateur sont sélectionnées dans une première bibliothèque.

7. Procédé selon l'une des revendications précédentes, dans lequel l'insertion de la au moins une instruction de surveillance (1310, 1320, 1330, 1340) à l'étape b. inclut l'exécution d'au moins un script d'insertion par le postprocesseur (260).

8. Procédé selon l'une des revendications précédentes, dans lequel l'insertion de la au moins une instruction de surveillance (1310, 1320, 1330, 1340) dans le programme de commande (270, 1300) inclut l'insertion d'au moins une fonction H et/ou d'au moins une fonction M dans le programme de commande (270, 1300).

9. Procédé selon la revendication 7 ou 8, dans lequel à chaque extension (410, 420) du programme de FAO (240, 400) est associée de façon univoque au moins une instruction de surveillance (1310, 1320, 1330, 1340) à insérer dans le programme de commande (270, 1300) de la machine-outil (150, 250).

10. Procédé selon l'une des revendications 1 à 3 et 7 à 9, dans lequel la au moins une instruction de surveillance (1310, 1320, 1330, 1340) transmet des valeurs limites pour une plage de variation d'une grandeur qu'utilise le système de surveillance (110, 210) pour la surveillance et/ou transmet des valeurs paramétriques pour déterminer des valeurs limites à partir desquelles le système de surveillance (110, 210) détecte les valeurs limites.

11. Procédé selon l'une des revendications 1 à 3 et 7 à 10, comprenant en outre le réglage de propriétés de régulation du système de surveillance (110, 210) selon des prescriptions qui sont transmises par la au moins une instruction de surveillance (1310, 1320, 1330, 1340) au système de surveillance (110, 210).

12. Dispositif selon l'une des revendications 1 à 3 et 7 à 11, comprenant en outre l'étape d'activation de réglages relatifs à l'outil sur la base de numéros d'outil qui sont transmis par la au moins une instruction de surveillance (1310, 1320, 1330, 1340) au système de surveillance (110, 210).

13. Dispositif de mise à disposition automatisée d'une fonction de surveillance pour un processus d'usinage (290) qui doit être réalisé par une machine-outil (150, 250), comprenant :
a. des moyens pour analyser un programme de fabrication assistée par ordinateur, FAO, (240, 400) du processus d'usinage (290), à l'aide d'un postprocesseur (260), portant sur des étapes d'usinage qui doivent être surveillées ; et
b. des moyens pour insérer au moins une instruction de surveillance (1310, 1320, 1330, 1340) dans un programme de commande (270, 1300) de la machine-outil (150, 250) par l'intermédiaire du postprocesseur (260), laquelle sera exécutée lors de la réalisation du processus d'usinage (290).

14. Dispositif selon la revendication 13, dans lequel le dispositif est conçu pour mettre en oeuvre un procédé selon l'une des revendications 1 à 12.

15. Programme informatique comprenant des instructions pour réaliser toutes les étapes du procédé de mise à disposition automatisée d'une fonction de surveillance pour un processus d'usinage (290) selon l'une des revendications 1 à 12 lorsque le programme informatique est exécuté dans le dispositif selon la revendication 13.
